# EUROPEAN PATENT SPECIFICATION

(11) **EP 2 264 100 B1**
(45) Date of publication and mention of the grant of the patent: **04.01.2017**
(21) Application number: 09725238.1
(22) Date of filing: 18.03.2009
(51) Int. Cl.: C08L 27/12, C08L 27/16, C08F 214/18, C08F 259/08, C08K 5/14

(54) **PEROXIDE CROSS-LINKED FLUORINE-CONTAINING ELASTOMER COMPOSITION**
PEROXIDVERNETZTE FLUORHALTIGE ELASTOMERZUSAMMENSETZUNG
COMPOSITION D'ÉLASTOMÈRE CONTENANT DU FLUOR RÉTICULÉ PAR PEROXYDE

(30) Priority: 27.03.2008 JP 2008084591
(43) Date of publication of application: 22.12.2010
(73) Proprietor: Daikin Industries, Ltd., Osaka 530-8323 (JP)
(72) Inventor: FUJISAWA, Manabu, Settsu-shi Osaka 566-8585 (JP); FUKUOKA, Shoji, Settsu-shi Osaka 566-8585 (JP); KISHINE, Mitsuru, Orangeburg New York 10962 (US)
(74) Representative: Hoffmann Eitle
(86) International application number: PCT/JP2009/055293
(87) International publication number: WO 2009/119409

(56) References cited:
- EP-A1- 1 029 875
- EP-A1- 1 243 617
- JP-A- 6 306 243
- JP-A- 8 100 033
- JP-A- 11 315 180
- JP-A- 51 129 481
- JP-A- 62 004 708
- JP-T- 2006 513 300
- LAURIANE SCANU ET AL: "Melt Rheology of Poly Vinilydene Fluoride: Evidence of Long Chain Branching and Microgel Formation", AIP CONFERENCE PROCEEDINGS, vol. 1027, 1 January 2008 (2008-01-01), pages 360-362, XP55006595, ISSN: 0094-243X, DOI: 10.1063/1.2964691

## Description

### TECHNICAL FIELD

The present invention relates to a peroxide-crosslinkable fluorine-containing elastomer composition having improved processability.

### BACKGROUND ART

Vinylidene fluoride/hexafluoropropylene type and tetrafluoroethylene/perfluoro vinyl ether type fluorine-containing elastomers exhibit prominent chemical resistance, solvent resistance and heat resistance, and therefore, are widely used in the fields of automobile industry, semiconductor industry and chemical industry as O-ring, gasket, hose, stem seal, shaft seal, diaphragm, etc. which are used under harsh environment.

Examples of fluorine-containing elastomers to be used for such applications are fluorine-containing elastomers having cure site such as highly active iodine atom at a molecular end thereof. The fluorine-containing elastomer having cure site at its molecular end can exhibit good crosslinking efficiency by the cure site at a molecular end, and have excellent crosslinkability. In addition, since no chemical substance containing metal component need be added, such elastomers are widely used as a peroxide-vulcanized molded article. Peroxide-vulcanizing system is excellent in chemical resistance and steam (hot water) resistance, but is inferior in compression set to polyol-vulcanizing system. This problem has been solved by introducing cure site to a trunk chain of an elastomer. Introduction of cure site is usually carried out by a method of copolymerizing a cure site monomer (CSM) having cure site (WO 2004/007 577 A and JP 2007/056 215 A). The thus-obtained fluorine-containing elastomer is of branched type structure.

Generally, elastomers having lower viscosity are advantageous in respect of dispersibility of additives such as a vulcanizing agent in an open roll and processability such as flowability at molding.

For decreasing viscosity of branched type fluorine-containing elastomer, a method of increasing an amount of CSM to increase the number of branches can be considered, but elongation is lowered though compression set is improved. In addition, increase in an amount of expensive CSM results in high cost. Also, a method of increasing an amount of a chain transfer agent represented by RIx (DI) to decrease a molecular weight can be considered, but since the number of branches in one molecule is decreased, compression set is lowered.

EP 1 243 617 A discloses a transparent elastomer composition wherein fluorine-containing resin particles are finely dispersed uniformly in an elastomer, wherein the elastomer includes VdF copolymers.

### DISCLOSURE OF INVENTION

### PROBLEM TO BE SOLVED BY THE INVENTION

It is an object of the present invention to provide a fluorine-containing elastomer composition of which viscosity can be decreased without increasing an amount of expensive CSM while maintaining compression set and physical properties in normal state of a branched fluorine-containing elastomer.

### MEANS TO SOLVE THE PROBLEM

The inventors of the present invention have considered increasing the amounts of DI and CSM and decreasing a molecular weight with the number of branches being maintained, but though compression set can be maintained, elongation is lowered and thus balance between properties of elastomer is lost. Further, increase in amounts of DI and CSM results in high cost. Accordingly, paying attention to the fact that in peroxide-crosslinking system, crosslinking reaction proceeds at an end of an elastomer, the inventors have found that by blending a straight chain type fluorine-containing elastomer in a given amount, viscosity can be decreased without increasing an amount of expensive CSM while maintaining physical properties in normal state such as compression set, strength and elongation of a branched fluorine-containing elastomer composition, and have completed the present invention. The reason for this is supposed to be such that a crosslinked structure is not largely changed after crosslinking.

Namely, the present invention relates to a peroxide-crosslinkable fluorine-containing elastomer composition comprising:
(A) a branched fluorine-containing elastomer having peroxide-crosslinkable cure site, which has a number average molecular weight of from 1,000 to 300,000 and a Mark-Houwink gradient "a" of less than 0.6 when an absolute weight molecular weight and an intrinsic viscosity are plotted on a Mark-Houwink plot having an axis of abscissa of absolute weight molecular weight and an axis of ordinate of intrinsic viscosity, and
(B) a straight chain type fluorine-containing polymer having a number average molecular weight of from 1,000 to 250,000 and a Mark-Houwink gradient "a" of not less than 0.6 when an absolute weight molecular weight and an intrinsic viscosity are plotted on a Mark-Houwink plot having an axis of abscissa of absolute weight molecular weight and an axis of ordinate of intrinsic viscosity.

and being selected from VdF/ HFP copolymer, VdF/HFP/TFE copolymer, VdF/PAVE copolymer, VdF/TFE/PAVE copolymer, VdF/HFP/PAVE copolymer and VdF/HFP/TFE/PAVE copolymer.

In the fluorine-containing elastomer composition of the present invention, it is preferable that a mass ratio (A)/(B) of the branched fluorine-containing elastomer (A) to the straight chain type fluorine-containing polymer (B) is 95/5 to 55/45 since in the case of the proportion of (B) of not more than 5 % by mass, there is less action of decreasing viscosity and in the case of the proportion of (B) of not less than 45 % by mass, properties of the straight chain type polymer begin to appear and lowering of physical properties in normal state such as elongation occurs.

Also, it is preferable that a Mooney viscosity (ML₁₊₁₀: 100°C) of the fluorine-containing elastomer composition of the present invention is 10 to 120, from the viewpoint of good mold-processability.

It is preferable, from the viewpoint of good compression set, that the branched fluorine-containing elastomer (A) is a fluorine-containing elastomer obtained by copolymerizing an ethylenically unsaturated compound comprising at least one fluoroolefin with a compound represented by the general formula (1):

CY¹₂=CY²R_{f}¹X¹ (1)

wherein Y¹ and Y² are fluorine atom, hydrogen atom or -CH₃; R_{f}¹ is a linear or branched fluorine-containing alkylene group which may have an ether bond-formable oxygen atom, in which a part or the whole of hydrogen atoms are replaced by fluorine atoms; X¹ is iodine atom or bromine atom, and/or with bisolefin.

The present invention also relates to a peroxide-crosslinkable fluorine-containing elastomer composition comprising:
(A) a branched fluorine-containing elastomer obtained by a method of preparation characterized in that when copolymerizing an ethylenically unsaturated compound comprising at least one fluoroolefin with a compound represented by the general formula (1):

   CY¹₂=CY²R_{f}¹X¹ (1)

   wherein Y¹ and Y² are fluorine atom, hydrogen atom or -CH₃; R_{f}¹ is a linear or branched fluorine-containing alkylene group which may have an ether bond-formable oxygen atom, in which a part or the whole of hydrogen atoms are replaced by fluorine atoms; X¹ is iodine atom or bromine atom, the addition of the compound represented by the general formula (1) starts at the time when the ethylenically unsaturated compound has been added to the polymerization system in an amount of 0 to 10 % by mass on the basis of the total amount of the ethylenically unsaturated compound to be added to the polymerization system after addition of a polymerization initiator, and
(B) a straight chain type fluorine-containing polymer having a number average molecular weight of from 1,000 to 250,000 and a Mark-Houwink gradient "a" of not less than 0.6 when an absolute weight molecular weight and an intrinsic viscosity are plotted on a Mark-Houwink plot having an axis of abscissa of absolute weight molecular weight and an axis of ordinate of intrinsic viscosity.

In this composition, it is preferable that the prepared branched fluorine-containing elastomer (A) has peroxide-crosslinkable cure site, has a number average molecular weight of from 1,000 to 300,000 and has a Mark-Houwink gradient "a" of less than 0.6 when an absolute weight molecular weight and an intrinsic viscosity are plotted on a Mark-Houwink plot having an axis of abscissa of absolute weight molecular weight and an axis of ordinate of intrinsic viscosity.

Also, it is preferable that a mass ratio (A)/(B) of the branched fluorine-containing elastomer (A) to the straight chain type fluorine-containing polymer (B) is 95/5 to 55/45 for the same reason as mentioned above.

Further, it is preferable that a Mooney viscosity (ML₁₊₁₀: 100°C) is 10 to 120 for the same reason as mentioned above.

It is preferable, from the viewpoint of cost, that the straight chain type fluorine-containing polymer (B) is a fluorine-containing elastomer which does not comprise the compound represented by the above-mentioned general formula (1) and/or bisolefin substantially.

The present invention also relates to a method of preparing the fluorine-containing elastomer composition of the present invention, in which after polymerizing the above-mentioned branched fluorine-containing elastomer (A), subsequently polymerization of the above-mentioned straight chain type fluorine-containing polymer (B) is carried out in the same polymerization reactor.

Also, the fluorine-containing elastomer composition of the present invention can be prepared by a method of mixing a dispersion of the above-mentioned branched fluorine-containing elastomer (A) to a dispersion of the above-mentioned straight chain type fluorine-containing polymer (B).

Further, the fluorine-containing elastomer composition of the present invention can be prepared by a method of subjecting the above-mentioned branched fluorine-containing elastomer (A) and the above-mentioned straight chain type fluorine-containing polymer (B) to dry blending.

The present invention also relates to a crosslinkable composition comprising the above-mentioned fluorine-containing elastomer composition and further a molded article obtained by crosslinking the crosslinkable composition.

In the present invention, a degree of branching of the polymer is evaluated by a gradient "a" of Mark-Houwink plot.

The Mark-Houwink plot is made to check to see a state of branching of a long chain of a polymer, and is a graph, in which an axis of abscissa represents an absolute weight molecular weight and an axis of ordinate represents an intrinsic viscosity. From this Mark-Houwink plot, a state of branching of a long chain of a polymer can be seen, and especially from a Mark-Houwink gradient "a" determined by plotting an absolute weight molecular weight and an intrinsic viscosity, a degree of branching of a long chain of a polymer of a fluorine-containing elastomer can be specified and the gradient "a" can also be used as a parameter for specifying (classifying) a substance. Even in the case of polymers having the same absolute weight molecular weight, when the number of branches of a long chain is larger, a molecular weight of the longest chain is smaller and an intrinsic viscosity is smaller. Accordingly, in the case of polymers having the same absolute weight molecular weight, the smaller the gradient "a" is (namely, since an intrinsic viscosity is smaller for an absolute weight molecular weight), the larger the number of branches of a long chain is, and on the other hand, a gradient "a" of a straight chain type polymer is large.

Generally, in measuring a weight average molecular weight, GPC analysis using a differential refractometer (RI) is used and a weight average molecular weight is a converted value obtained indirectly in comparison with a standard polymer such as polystyrene. On the other hand, an absolute weight molecular weight is directly obtained, for example, by GPC light scattering.

An intrinsic viscosity is an index for a size and form of a molecule, and its measuring method is explained infra.

### EFFECT OF THE INVENTION

The present invention can provide a fluorine-containing elastomer composition of which viscosity can be decreased without increasing amounts of expensive DI and CSM while maintaining physical properties in normal state of a branched fluorine-containing elastomer.

### BEST MODE FOR CARRYING OUT THE INVENTION

The peroxide-crosslinkable fluorine-containing elastomer composition of the present invention comprises the branched fluorine-containing elastomer (A) and the straight chain type fluorine-containing polymer (B).

The branched fluorine-containing elastomer (A) is a fluorine-containing elastomer having a branched long chain and has peroxide-crosslinkable cure site, a number average molecular weight of from 1,000 to 300,000 and a Mark-Houwink gradient "a" of less than 0.6 when an absolute weight molecular weight and an intrinsic viscosity are plotted on a Mark-Houwink plot having an axis of abscissa of absolute weight molecular weight and an axis of ordinate of intrinsic viscosity.

Examples of the peroxide-crosslinkable cure site are iodine atom, bromine atom and cyano group. Among these, iodine atom is preferred from the viewpoint of good reactivity. In the branched fluorine-containing elastomer, the cure site is present at an end of its branched chain.

For introducing cure sites, there is a method of copolymerizing a monomer (CSM) having peroxide-crosslinkable cure site or a method of using, as a chain transfer agent, a compound (for example, polyiodide compound such as RIx) leaving a plurality of peroxide-crosslinkable cure sites as a residue.

A number average molecular weight of the branched fluorine-containing elastomer (A) is from 1,000 to 300,000, preferably from 10,000 to 200,000. When the number average molecular weight is less than 1,000, viscosity is too low, and handling becomes difficult, and when the number average molecular weight exceeds 300,000, viscosity becomes too high, and handling becomes difficult.

The molecular weight distribution (weight average molecular weight Mw / number average molecular weight Mn) is preferably not less than 1.3, more preferably not less than 1.5. An upper limit of the molecular weight distribution is not limited particularly and is preferably not more than 8. When the molecular weight distribution is less than 1.3, there is no problem with physical properties, but processability with rolls tends to be lowered, and when the molecular weight distribution exceeds 8, there is a tendency that heat generation and adhesion to rolls occur at processing with rolls.

The number average molecular weight can be adjusted by usual method, for example, by controlling a polymerization time, or by using a molecular weight regulator.

When an absolute weight molecular weight and an intrinsic viscosity of the branched fluorine-containing elastomer (A) are plotted on a Mark-Houwink plot having an axis of abscissa of absolute weight molecular weight and an axis of ordinate of intrinsic viscosity, a Mark-Houwink gradient "a" is less than 0.6, preferably not more than 0.55, more preferably not more than 0.46, further preferably not more than 0.35, especially preferably not more than 0.33. A lower limit is 0. When the gradient "a" is larger than 0.6, not only the number of branched chains of a long chain becomes small and compression set is not improved but also characteristics such as heat resistance are lowered.

The branched fluorine-containing elastomer (A) is preferably a branched fluorine-containing elastomer obtained by copolymerizing an ethylenically unsaturated compound comprising at least one fluoroolefin with the compound represented by the general formula (1):

CY¹₂=CY²R_{f}¹X¹ (1)

wherein Y¹ and Y² are fluorine atom, hydrogen atom or -CH₃; R_{f}¹ is a linear or branched fluorine-containing alkylene group which may have an ether bond-formable oxygen atom, in which a part or the whole of hydrogen atoms are replaced by fluorine atoms; X¹ is iodine atom or bromine atom.

Among these branched fluorine-containing elastomers, those having a Mark-Houwink gradient "a" of not more than 0.46 are novel polymers.

Examples of other branched fluorine-containing elastomers (A) being usable in the present invention are branched fluorine-containing elastomers described in EP 0 967 248 A1 branched fluorine-containing elastomers described in WO 2004/007 577 A1 branched fluorine-containing elastomers described in JP 2007/056 215 A.

Examples of the compound to be used for preparing the branched fluorine-containing elastomer (A) and represented by the general formula (1):

CY¹₂=CY²R_{f}¹X¹ (1)

wherein Y¹ and Y² are fluorine atom, hydrogen atom or -CH₃; R_{f}¹ is a linear or branched fluorine-containing alkylene group which may have an ether bond-formable oxygen atom, in which a part or the whole of hydrogen atoms are replaced by fluorine atoms; X¹ is iodine atom or bromine atom, are iodine-containing monomers and bromine-containing monomers represented by the general formula (4):

CY¹₂=CY²R_{f}³CHR¹-X¹ (4)

wherein Y¹, Y² and X¹ are as defined above; R_{f}³ is a linear or branched fluorine-containing alkylene group which may have at least one ether bond-formable oxygen atom, in which a part or the whole of hydrogen atoms are replaced by fluorine atoms, namely a linear or branched fluorine-containing alkylene group, in which a part or the whole of hydrogen atoms are replaced by fluorine atoms, a linear or branched fluorine-containing oxyalkylene group, in which a part or the whole of hydrogen atoms are replaced by fluorine atoms, or a linear or branched fluorine-containing polyoxyalkylene group, in which a part or the whole of hydrogen atoms are replaced by fluorine atoms; R¹ is hydrogen atom or methyl group, and
iodine-containing monomers and bromine-containing monomers represented by the general formulas (5) to (22):

CY⁴₂=CY⁴(CF₂)ₙ-X¹- (5)

where Y⁴ is hydrogen atom or fluorine atom, n is an integer of 1 to 8,

CF₂=CFCF₂R_{f}⁴-X¹ (6)

where R_{f}⁴ is (̵OCF₂)̵ₙ or (̵OCF(CF₃))̵ₙ, n is 0 or an integer of 1 to 5,

CF₂=CFCF₂(OCF(CF₃)CF₂)ₘ(OCH₂CF₂CF₂)nOCH₂CF₂-X¹ (7)

where m is 0 or an integer of 1 to 5, n is 0 or an integer of 1 to 5,

CF₂=CFCF₂(OCH₂CF₂CF₂)ₘ(OCF(CF₃)CF₂)ₙOCF(CF₃)-X¹ (8)

where m is 0 or an integer of 1 to 5, n is 0 or an integer of 1 to 5,

CF₂=CF(OCF₂CF(CF₃))ₘO(CF₂)ₙ-X¹ (9)

where m is 0 or an integer of 1 to 5, n is an integer of 1 to 8,

CF₂=CF(OCF₂CF(CF₃))ₘ-X¹ (10)

where m is an integer of 1 to 5,

CF₂=CFOCF₂(CF(CF₃)OCF₂)ₙCF(-X¹)CF₃ (11)

where n is an integer of 1 to 4,

CF₂=CFO(CF₂)ₙOCF(CF₃)-X¹ (12)

where n is an integer of 2 to 5,

CF₂=CFO(CF₂)ₙ-(C₆H₄)-X¹ (13)

where n is an integer of 1 to 6,

CF₂=CF(OCF₂CF(CF₃))ₙOCF₂CF(CF₃)-X¹ (14)

where n is an integer of 1 to 2,

CH₂=CFCF₂O(CF(CF₃)CF₂O)ₙCF(CF₃)-X¹ (15)

where n is 0 or an integer of 1 to 5,

CF₂=CFO(CF₂CF(CF₃)O)ₘ(CF₃)ₙ-X¹ (16)

where m is 0 or an integer of 1 to 5, n is an integer of 1 to 3,

CH₂=CFCF₂OCF(CF₃)OCF(CF₃)-X¹ (17)

CH₂CFCF₂OCH₂CF₂-X¹ (18)

CF₂=CFO(CF₂CF(CF₃)O)ₘCF₂CF(CF₃)-X¹ (19)

where m is an integer of not less than 0,

CF₂=CFOCF(CF₃)CF₂O(CF₂)ₙ-X¹ (20)

where n is an integer of not less than 1,

CF₂=CFOCF₂OCF₂CF(CF₃)OCF₂-X¹ (21),

and

CH₂=CH-(CF₂)ₙX¹ (22)

where n is an integer of 2 to 8,
(in the general formulas (5) to (22), X¹ is as defined above),
and these can be used alone or can be used in an optional combination thereof.

Preferred examples of the iodine- or bromine-containing monomer represented by the general formula (4) are iodine-containing fluorinated vinyl ethers represented by the general formula (23): 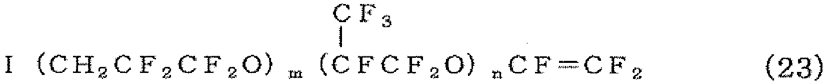 where m is an integer of 1 to 5, n is 0 or an integer of 1 to 3, and specifically there are:
I CH₂CF₂CF₂OCF=CF₂, I (CH₂CF₂CF₂O)₂CF=CF₂, I (CH₂CF₂CF₂O)₃CF=CF₂, 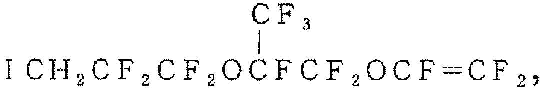 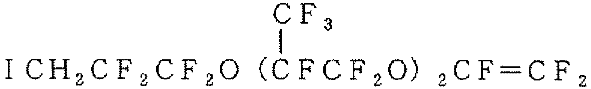 and among these, ICH₂CF₂CF₂OCF=CF₂ is preferred.

More specifically, preferred examples of the iodine-containing monomer or bromine-containing monomer represented by the general formula (5) are ICF₂CF₂CF=CH₂ and I(CF₂CF₂)₂CF=CH₂.

More specifically, preferred example of the iodine-containing monomer or bromine-containing monomer represented by the general formula (9) is I(CF₂CF₂)₂OCF=CF₂.

More specifically, preferred examples of the iodine-containing monomer or bromine-containing monomer represented by the general formula (22) are CH₂=CHCF₂CF₂I and I(CF₂CF₂)₂CH=CH₂.

Among the compounds represented by the above-mentioned general formulas (4) to (22), monomers having X¹ of cyano group (-CN group), carboxyl group (-COOH group) or alkoxycarbonyl group (-COOR group, where R is an alkyl group which has 1 to 10 carbon atoms and may have fluorine atom) may be used together with the compound represented by the general formula (1).

Preferred examples of the fluoroolefin to be used for preparing the branched fluorine-containing elastomer (A) are those represented by the general formula (2):

CX²X³=CX⁴X⁵ (2)

wherein X² to X⁴ are hydrogen atom or halogen atom; X⁵ is hydrogen atom, halogen atom, carboxyl group, a fluorine-containing alkyl group which has 1 to 9 carbon atoms and may have ether bond-formable oxygen atom, in which a part or the whole of hydrogen atoms are replaced by fluorine atoms, or a fluorine-containing alkoxy group which has 1 to 9 carbon atoms and may have ether bond-formable oxygen atom, in which a part or the whole of hydrogen atoms are replaced by fluorine atoms; at least one of X² to X⁵ is fluorine atom, a fluorine-containing alkyl group or a fluorine-containing alkoxy group.

Examples of the fluoroolefin represented by the general formula (2) are hexafluoropropylene (HFP), vinylidene fluoride (VdF), tetrafluoroethylene (TFE), trifluoroethylene, pentafluoropropylene, vinyl fluoride, hexafluoroisobutene, chlorotrifluoroethylene (CTFE), trifluoropropylene, pentafluoropropylene, tetrafluoropropylene, hexafluoroisobutene, perfluoro(alkyl vinyl ether) (PAVE), and the like, and from the point that elastomeric formulation can be easily obtained, vinylidene fluoride (VdF), hexafluoropropylene (HFP), tetrafluoroethylene (TFE), perfluoro(alkyl vinyl ether) (PAVE), trifluoroethylene, pentafluoropropylene, vinyl fluoride and hexafluoroisobutene are preferred.

Perfluoro(alkyl vinyl ethers) are preferred also from the viewpoint of cold resistance and chemical resistance.

Examples of perfluoro(alkyl vinyl ether) are perfluoro(methyl vinyl ether) (PMVE), perfluoro(ethyl vinyl ether) (PEVE), and perfluoro(propyl vinyl ether) (PPVE).

Examples of fluoroolefin other than the fluoroolefins represented by the general formula (2) are fluoroolefins represented by: 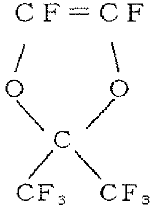 and CF₂=CFOCF₂CF=CF₂, polyfluorodienes and functional group-containing fluoroolefins represented by the general formula (3): 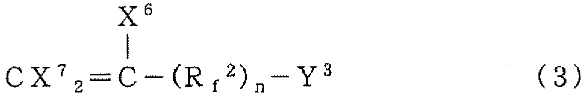 wherein Y³ is -CH₂I, -OH, -COOH, -SO₂F, -SO₃M (M is hydrogen atom, NH₄ or alkali metal atom), carboxylate, carboxyester group, epoxy group, cyano group or iodine atom; X⁶ and X⁷ are the same or different and each is hydrogen atom or fluorine atom; R_{f}² is a fluorine-containing divalent alkylene group which has 1 to 40 carbon atoms and may have ether bond-formable oxygen atom; n is 0 or 1; the same compounds as the compounds of the general formula (1) are excluded.

Functional group-containing fluoroolefins are preferred as a functional monomer for surface modification and increase in crosslinking density, and polyfluorodienes are preferred from the viewpoint of crosslinking efficiency.

Examples of functional group-containing fluoroolefins represented by the general formula (3) are:
CF₂=CFOCF₂CF₂CH₂OH, CF₂=CFO(̵CF₂)̵₃COOH,
CF₂=CFOCF₂CF₂COOCH₃, 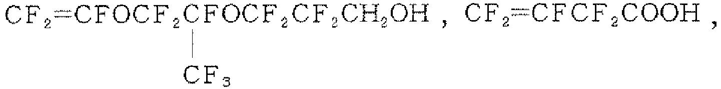 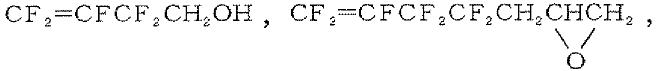
CF₂=CFCF₂OCF₂CF₂CF₂COOH, 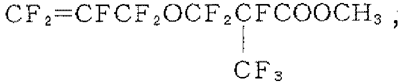 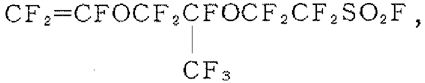 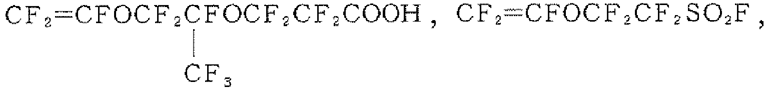
CF₂=CFCF₂CF₂COOH, CF₂=CFCF₂COOH,
CH₂=CFCF₂CF₂CH₂CH₂OH, CH₂=CFCF₂CF₂COOH, 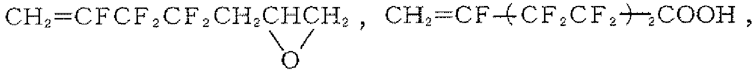 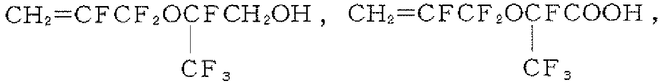 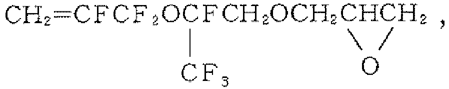 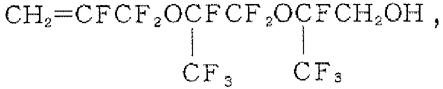 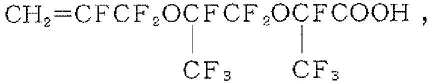
CH₂=CHCF₂CF₂CH₂CH₂COOH,
CH₂=CH(̵CF₂)̵₄CH₂CH₂CH₂OH,
CH₂=CH(̵CF₂)̵₆CH₂CH₂COOCH₃, 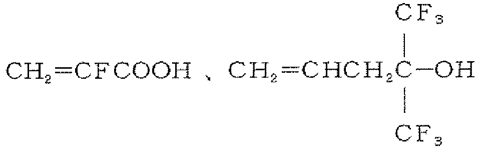 and the like.

Examples of polyfluorodienes are CF₂=CFCF=CF₂, CF₂=CFCF₂OCF=CF₂, and the like.

Ethylenically unsaturated compounds other than fluoroolefins are not limited particularly, and examples thereof are α-olefin monomers having 2 to 10 carbon atoms such as ethylene (ET), propylene, butene and pentene, and alkyl vinyl ethers having alkyl group of C1 to C20 such as methyl vinyl ether, ethyl vinyl ether, propyl vinyl ether, cyclohexyl vinyl ether, hydroxybutyl vinyl ether and butyl vinyl ether. These are preferred from the viewpoint of low cost and amine resistance.

Examples of a combination of monomers forming the branched fluorine-containing elastomer (A) are a combination of one or more fluoroolefins represented by the above-mentioned general formula (2), a combination of one or more fluoroolefins other than the fluoroolefins of the general formula (2), and a combination of one or more fluoroolefins represented by the above-mentioned general formula (2) and one or more fluoroolefins other than the fluoroolefin of the general formula (2), and in the respective combinations, an ethylenically unsaturated compound other than fluoroolefin may be contained as a copolymerizable monomer.

Among the fluoroolefins represented by the above-mentioned general formula (2) and ethylenically unsaturated compounds other than the fluoroolefins represented by the general formula (2), for the purpose of forming a fluorine-containing elastomer assuring low cost and having good crosslinkability, it is preferable that the fluoroolefins comprise vinylidene fluoride (VdF) and a copolymerizable ethylenically unsaturated compound.

Particularly VdF type elastomers comprising VdF and other monomers are suitable as the branched fluorine-containing elastomer (A).

Specifically in the above-mentioned VdF type elastomers, the amount of VdF repeat units is preferably not less than 20 % by mole and not more than 90 % by mole, more preferably not less than 40 % by mole and not more than 85 % by mole based on the total number of moles of the VdF repeat units and repeat units derived from other co-monomers. A further preferred lower limit is 45 % by mole, especially preferred lower limit is 50 % by mole, and a further preferred upper limit is 80 % by mole.

Other monomers in the above-mentioned VdF type elastomers are not limited particularly as far as they are copolymerizable with VdF, and there are, for example, fluorine-containing monomers such as TFE, HFP, PAVE, CTFE, trifluoroethylene, trifluoropropylene, tetrafluoropropylene, pentafluoropropylene, trifluorobutene, tetrafluoroisobutene, vinyl fluoride and iodine-containing fluorinated vinyl ether; and non-fluorine-containing monomers such as ethylene (Et), propylene (Pr) and alkyl vinyl ether, and one of these fluorine-containing monomers and non-fluorine-containing monomers can be used or two or more thereof can be used in combination. With respect to PAVE, perfluoro(methyl vinyl ether) and perfluoro(propyl vinyl ether) are preferred, and especially perfluoro(methyl vinyl ether) is preferred.

Preferred examples of the above-mentioned VdF type elastomers are VdF/HFP copolymer, VdF/HFP/TFE copolymer, VdF/CTFE copolymer, VdF/CTFE/TFE copolymer, VdF/PAVE copolymer, VdF/TFE/PAVE copolymer, VdF/HFP/PAVE copolymer, VdF/HFP/TFE/PAVE copolymer, VdF/TFE/Pr copolymer, and VdF/Et/HFP copolymer, and copolymers comprising TFE, HFP and/or PAVE are more preferred. Especially VdF/HFP copolymer, VdF/HFP/TFE copolymer, VdF/PAVE copolymer, VdF/TFE/PAVE copolymer, VdF/HFP/PAVE copolymer and VdF/HFP/TFE/PAVE copolymer are preferred.

In the VdF/ HFP copolymer, a ratio of VdF/ HFP is preferably 45 to 85/55 to 15 (mole %), more preferably 50 to 80/50 to 20 (mole %), further preferably 60 to 80/40 to 20 (mole %).

A preferred VdF/HFP/TFE copolymer is one comprising VdF/HFP/TFE in a ratio of 40 to 80/10 to 35/10 to 25 (mole %).

A preferred VdF/PAVE copolymer is one comprising VdF/PAVE in a ratio of 65 to 90/10 to 35 (mole %).

A preferred VdF/TFE/PAVE copolymer is one comprising VdF/TFE/PAVE in a ratio of 40 to 80/3 to 40/15 to 35 (mole %).

A preferred VdF/HFP/PAVE copolymer is one comprising VdF/HFP/PAVE in a ratio of 65 to 90/3 to 25/3 to 25 (mole %).

A preferred VdF/HFP/TFE/PAVE copolymer is one comprising VdF/HFP/TFE/PAVE in a ratio of 40 to 90/0 to 25/0 to 40/3 to 35 (mole %), more preferably one comprising VdF/HFP/TFE/PAVE in a ratio of 40 to 80/3 to 25/3 to 40/3 to 25 (mole %).

The branched fluorine-containing elastomer (A) can be preferably prepared from an ethylenically unsaturated compound comprising at least one fluoroolefin and the compound represented by the above-mentioned general formula (1), according to the following manner. Namely, the addition of the compound of the formula (1) starts at the time when the above-mentioned ethylenically unsaturated compound has been added to the polymerization system in an amount of 0 to 10 % by mass on the basis of the total amount of the above-mentioned ethylenically unsaturated compound to be added to the polymerization system after addition of a polymerization initiator, that is, the total amount of the ethylenically unsaturated compound to be introduced to the polymerization system after initiating the polymerization by adding the polymerization initiator (hereinafter referred to as "total addition amount").

The addition of the compound represented by the general formula (1) is initiated when the above-mentioned ethylenically unsaturated compound has been added in an amount of 0 to 10 % by mass based on its total addition amount, preferably 0 to 8 % by mass based on its total addition amount, further preferably 0 to 5 % by mass based on its total addition amount. If the addition of the compound represented by the general formula (1) is initiated when the ethylenically unsaturated compound has been added in an amount of more than 10 % by mass based on its total addition amount, only growth of molecules of a trunk chain proceeds first, and length of molecules of a trunk chain and a side chain becomes non-uniform and as a result, distribution of distance between cure sites tends to be lowered in uniformity. Here, the meaning that the addition of the compound represented by the general formula (1) is initiated when the amount of the added ethylenically unsaturated compound is 0 % by mass based on its total addition amount is such that the compound represented by the general formula (1) is added to a polymerization system previously before addition of a polymerization initiator or at the same time as addition of a polymerization initiator or after starting of the polymerization and before the ethylenically unsaturated compound is added, and then addition of the ethylenically unsaturated compound is started. It is especially preferable to start the addition of the compound represented by the general formula (1) at the same time as addition of a polymerization initiator (at the time of 0 % by mass of the total addition amount of the compound).

A method of adding the compound represented by the general formula (1) is not limited particularly, and the compound may be added batchwise or may be added several times such as two times or three times separately or may be added continuously.

Timing of finishing the addition of the compound represented by the general formula (1) is not limited particularly, and the addition of the compound represented by the general formula (1) is finished preferably when 0 to 20 % by mass of the ethylenically unsaturated compound based on its total addition amount has been added, more preferably when 0 to 10 % by mass of the ethylenically unsaturated compound based on its total addition amount has been added. If the addition of the compound represented by the general formula (1) is finished after 20 % by mass has been added, only growth of molecules of a trunk chain proceeds first, and as a result, distribution of distance between cure sites tends to be lowered in uniformity. Here, the meaning that the addition of the compound represented by the general formula (1) is finished when the amount of the added ethylenically unsaturated compound is 0 % by mass based on its total addition amount is such that the compound represented by the general formula (1) is added batchwise to a polymerization system previously before addition of a polymerization initiator or at the same time as addition of a polymerization initiator or after starting of the polymerization and before the ethylenically unsaturated compound is added, and then addition of the ethylenically unsaturated compound is started.

Here, there can be usually employed a method of previously charging the ethylenically unsaturated compound in a polymerization system, adding a polymerization initiator to initiate polymerization, and at the above-mentioned timing, carrying out additional charging of the ethylenically unsaturated compound and addition of the compound represented by the general formula (1), thus continuing the polymerization. A method of additionally charging the ethylenically unsaturated compound is not limited particularly, and the compound may be added batchwise or may be added several times such as two times or three times separately or may be added continuously.

The amount of compound represented by the general formula (1) is preferably 0.3 to 5.0 parts by mass, more preferably 0.5 to 2.0 parts by mass based on 100 parts by mass of the fluorine-containing elastomer.

A specific method of preparing the branched fluorine-containing elastomer (A) is not limited particularly, and an iodine transfer polymerization method is preferred since it is relatively easy to make cure site distance distribution as uniform as possible.

An iodine transfer polymerization method is explained below.

It is preferable to use a pressure resistant vessel as a reactor to be used for iodine transfer polymerization under pressure. In the case where polymerization is not carried out under especially high pressure, a reactor is not limited particularly, and a reactor to be used for usual preparation of an elastomer can be used. Into this reactor is charged an aqueous medium (usually pure water) of polymer particles for emulsion polymerization having the same composition as the target polymer (fluorine-containing elastomer) to prepare a liquid phase portion.

The inside of the reactor is composed of this liquid phase portion and a gas phase portion, and after the gas phase portion is replaced by nitrogen gas or the like, a polymerizable monomer (ethylenically unsaturated compound) is introduced. Then, the inside of the reactor, especially the liquid phase portion is stirred to supply the polymerizable monomer from the gas phase portion to the liquid phase portion. The monomer supplied to the liquid phase portion permeates into polymer particles to increase a concentration of the polymerizable monomer in the polymer particles. By continuing feeding of the monomer to the gas phase portion, a concentration of the polymerizable monomer in the polymer particles is in a saturated state (it can be said that a feeding rate of the monomer into the liquid phase portion is in an equilibrium state), and then, a polymerization initiator and an iodine compound are charged to initiate polymerization.

As the polymerization proceeds, monomer is consumed and a monomer concentration in the produced polymer particles is decreased, and therefore, feeding of a monomer (additional monomer) to polymer particles is continued.

The amount of additional monomer varies depending on kind of a monomer to be added and a target composition of a polymer, and is preferably one keeping a monomer composition in the reactor constant at an initial stage of polymerization. It is desirable to add the compound represented by the general formula (1) at the above-mentioned time.

In the iodine transfer polymerization method, polymerization temperature and pressure are not limited particularly, and are optionally selected depending on kind of a monomer and kind of the compound represented by the general formula (1). Polymerization temperature is preferably 10° to 140°C, more preferably 30° to 100°C, and polymerization pressure is preferably 0.1 to 15 MPa, more preferably 3 to 12 MPa. When polymerization temperature is less than 10°C, there is a tendency that not only the monomer concentration in the polymer particles does not reach to saturation and a polymerization rate is decreased but also the target polymer is difficult to obtain. An upper limit of the pressure is not limited particularly, and is preferably not more than 15 MPa, more preferably not more than 12 MPa in consideration of handling of the monomer and cost of reacting facilities. Further, it is preferable to carry out stirring. This is because by stirring, a monomer concentration in the polymer particles can be maintained high during the polymerization. For example, anchor blade, turbine blade, inclined blade, etc. can be used as stirring means. From the viewpoint of good monomer diffusion and good dispersion stability of the polymer, the stirring with a large size blade called FULLZONE or MAXBLEND is preferred. With respect to stirring equipment, either of horizontal stirrer and vertical stirrer may be employed.

The reaction system has a monomer phase portion substantially. Here, having a monomer phase portion substantially means that the polymerization is carried out in a state that a volume of a medium such as water is not more than 90 %, preferably not more than 80 % to a volume of a polymerization vessel. When the volume exceeds 90 %, there is a tendency that the monomer is hardly fed to the medium and a polymerization rate is reduced or physical properties of the polymer are lowered.

Example of the iodine compound is an iodine compound represented by the general formula (24):

R_{f}⁵· Iₓ (24)

In the formula, R_{f}⁵ is preferably a saturated or unsaturated fluorohydrocarbon group or chlorofluorohydrocarbon group having 1 to 16 carbon atoms, or a perfluoroalkyl group having 4 to 8 carbon atoms. When the number of carbon atoms exceeds 16, reactivity tends to be lowered.

"x" of the iodine compound represented by the general formula (24) is the number of bonds of R_{f}⁵, and is an integer of 1 to 4, preferably an integer of 2 to 3. Even if "x" exceeds 4, the compound can be used, but it is not preferred from the viewpoint of synthesis cost.

Carbon-iodine bond of this iodine compound is a relatively weak bond, and is subject to cleavage as a radical in the presence of a radical generating source. Since reactivity of the generated radical is high, the monomer undergoes addition growth reaction and then by removing iodine from the iodine compound, the reaction is stopped. In the thus obtained fluorine-containing elastomer having iodine bonded to carbon at an end of its molecule, the end iodine acts as an effective cure site and crosslinking can be efficiently conducted.

Examples of the iodine compound represented by the general formula (24) are, for instance, monoiodoperfluoromethane, monoiodoperfluoroethane, monoiodoperfluoropropane, monoiodoperfluorobutane (for example, 2-iodoperfluorobutane, 1-iodoperfluoro(1,1-dimethylethane)), monoiodoperfluoropentane (for example, 1-iodoperfluoro(4-methylbutane)), 1-iodoperfluoro-n-octane, monoiodoperfluorocyclobutane, monoiodoperfluorocyclohexane, monoiodotrifluorocyclobutane, monoiododifluoromethane, monoiodomonofluoromethane, 2-iodo-1-hydroperfluoroethane, 3-iodo-1-hydroperfluoropropane, monoiodomonochlorodifluoromethane, monoiododichloromonofluoromethane, 2-iodo-1,2-dichloro-1,1,2-trifluoroethane, 4-iodo-1,2-dichloroperfluorobutane, 6-iodo-1,2-dichloroperfluorohexane, 4-iodo-1,2,4-trichloroperfluorobutane, 1-iodo-2,2-dihydroperfluorapropane, 1-iodo-2-hydroperfluoropropane, monoiodotrifluoroethylene, 3-iodoperfluorapropene-1, 4-iodoperfluoropentene-1, 4-iodo-5-chloroperfluoropentene-1, 2-iodoperfluoro(1-cyclobutenylethane), 1,3-diiodoperfluoropropane, 1,4-diiodoperfluoro-n-butane, 1,3-diiodo-2-chloroperfluorapropane, 1,5-diiodo-2,4-dichloroperfluoro-n-pentane, 1,7-diiodoperfluoro-n-octane, 1,2-di(iododifluoromethyl)perfluorocyclobutane, 2-iodo-1,1,1-trifluoroethane, 1-iodo-1-hydroperfluoro(2-methylethane), 2-iodo-2,2-dichloro-1,1,1-trifluoroethane, 2-iodo-2-chloro-1,1,1-trifluoroethane and the like. Further, a functional group such as ether bond-formable oxygen atom, thioether bond-formable sulfur atom or carboxyl group may be contained in the hydrocarbon group of R_{f}⁵, and examples thereof are 2-iodoperfluoro(ethyl vinyl ether), 2-iodoperfluoro(ethyl isopropyl ether), 3-iodo-2-chloroperfluoro(butyl methyl thioether) and 3-iodo-4-chloroperfluorobutyric acid.

Among these, 1,4-diiodoperfluoro-n-butane is preferred from the viewpoint of easy synthesis, reactivity, economy and stability.

The amount of iodine compound is preferably 0.05 to 2.0 % by mass based on the branched fluorine-containing elastomer (A). When the amount is less than 0.05 % by mass, there is a tendency that crosslinking proceeds insufficiently and compression set (CS) is lowered, and when the amount exceeds 2.0 % by mass, there is a tendency that since crosslinking density becomes too high, performance of a rubber such as elongation is impaired.

The iodine compound may be added batchwise at an initial stage of polymerization or may be added several times separately.

In the iodine transfer polymerization, an oil soluble radical polymerization initiator or a water soluble radical polymerization initiator can be used as a polymerization initiator.

Usually known oil soluble peroxides are used as an oil soluble radical polymerization initiator, and represented examples thereof are dialkyl peroxycarbonates such as di-isopropyl peroxydicarbonate and di-sec-butyl peroxydicarbonate; peroxy esters such as t-butyl peroxyisobutyrate and t-butyl peroxypivalate; dialkyl peroxides such as di-t-butyl peroxide; di[perfluoro (or fluorochloro)acyl] peroxides such as di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluoroctanoyl)peroxide, di (perfluorononanoyl) peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl) peroxide, di(tetrachloroundecafluorooctanoyl)peroxide, di(pentachlorotetradecafluorodecanoyl)peroxide and di(undecachlorodotriacontafluorodocosanoyl)peroxide; and the like.

However, peroxycarbonates such as di-isopropyl peroxycarbonate (IPP) and di-n-propyl peroxycarbonate (NPP) which are represented oil soluble initiators have a risk of explosion, is expensive and has a problem that during a polymerization reaction, adhesion of scales on side walls of a polymerization reactor easily occurs. Therefore, it is preferable to use a water soluble polymerization initiator.

Usually known water soluble peroxides are used as a water soluble radical polymerization initiator. Examples thereof are, for instance, ammonium salts, potassium salts and sodium salts of persulfuric acid, perboric acid, perchloric acid, perphosphoric acid and percarbonic acid, and t-butyl permaleate, t-butyl hydroperoxide and the like.

An amount of water soluble radical polymerization initiator is not limited particularly, and at least an amount which does not decrease the polymerization rate significantly (for example, several ppm based on water) may be added batchwise at an initial stage of the polymerization, or intermittently or continuously. An upper limit of the adding amount is within a range where polymerization reaction heat can be removed from the surface of the equipment.

In addition, an emulsifying agent, a molecular weight regulator, a pH regulator and the like may be added. A molecular weight regulator may be added batchwise at an initial stage of the polymerization or may be added continuously or intermittently.

A nonionic surfactant, anionic surfactant and cationic surfactant can be used as an emulsifying agent, and particularly preferable examples of anionic surfactants are perfluorooctanoic acid (CF₃(CF₂)₆COOH), 1,1,2,2-tetrahydraperfluorohexane sulfonic acid (CF₃(CF₂)₃CH₂CH₂SO₃H), 1,1,2,2-tetrahydroperfluorooctane sulfonic acid (CF₃(CF₂)₅CH₂CH₂SO₃H), and ammonium salts or alkali metal salts thereof.

Examples of a molecular weight regulator are, for instance, esters such as dimethyl malonate, diethyl malonate, methyl acetate, ethyl acetate, butyl acetate and dimethyl succinate, and in addition, isopentane, isopropanol, acetone, various mercaptans, carbon tetrachloride, cyclohexane, monoiodo methane, 1-iodoethane, 1-iodo-n-propane, isopropyl iodide, diiodo methane, 1,2-diiodoethane, 1,3-diiodo-n-propane, and the like.

In addition, a buffer or the like may be added optionally to an extent not to impair the effect of the present invention.

It is preferable that the branched fluorine-containing elastomer (A) contains 0.01 to 8 % by mass, preferably 0.05 to 2 % by mass of iodine atoms. When the amount of iodine atom is less than 0.01 % by mass, there is a tendency that crosslinking proceeds insufficiently and compression set is lowered, and when the amount exceeds 8 % by mass, there is a tendency that crosslinking density becomes too high and lowering of performance of a rubber such as too small elongation occurs.

The fluorine-containing polymer (B) which is another component of the fluorine-containing elastomer composition of the present invention is a straight chain type fluorine-containing polymer having a number average molecular weight of from 1,000 to 250,000 and a Mark-Houwink gradient "a" of not less than 0.6 when an absolute weight molecular weight and an intrinsic viscosity are plotted on a Mark-Houwink plot having an axis of abscissa of absolute weight molecular weight and an axis of ordinate of intrinsic viscosity.

The number average molecular weight of the straight chain type fluorine-containing polymer (B) is 1,000 to 250,000, preferably 5,000 to 140,000, more preferably 15,000 to 100,000. When the number average molecular weight exceeds 250,000, there is a tendency that compression set is lowered when the polymer (B) is mixed to the branched fluorine-containing elastomer, and when the number average molecular weight is less than 1,000, physical properties in normal state such as elongation tends to be lowered, and since the amount of iodine compound to be used is increased, cost tends to increase.

The molecular weight distribution (weight average molecular weight Mw / number average molecular weight Mn) is preferably not less than 1.1 while a lower limit is not limited particularly. It is preferable that an upper limit of the molecular weight distribution is not more than 4. When the molecular weight distribution is less than 1.1, there is no problem with physical properties but processability with rolls tends to be lowered, and when the molecular weight distribution exceeds 4, there is a tendency that heat generation and adhesion to rolls occur at processing with rolls.

The number average molecular weight can be adjusted by usual method, for example, by controlling a polymerization time, or by using a molecular weight regulator.

The Mark-Houwink gradient "a" of the straight chain type fluorine-containing polymer (B) is not less than 0.6, preferably not less than 0.7 when an absolute weight molecular weight and an intrinsic viscosity are plotted on a Mark-Houwink plot having an axis of abscissa of absolute weight molecular weight and an axis of ordinate of intrinsic viscosity. An upper limit of the Mark-Houwink gradient "a" is 1. When the gradient "a" is less than 0.6, the number of branched chains of a long chain is increased and the disturbance of the crosslinked structure occurs, and as a result, there is a tendency that physical properties in normal state such as elongation are lowered.

The fluoroolefin of the polymer (B) need not be the same as that of the branched fluorine-containing elastomer (A), and may differ in kind and proportion from those of the branched fluorine-containing elastomer (A). From the viewpoint of good affinity, the same kind and proportion are preferred (while fluoroolefins of (A) and (B) differs in branched state and molecular weight).

Examples of perfluoro(alkyl vinyl ether) are perfluoro(methyl vinyl ether) (PMVE), perfluoro(ethyl vinyl ether) (PEVE), and perfluoro(propyl vinyl ether) (PPVE).

Specifically in the above-mentioned VdF type elastomers, the amount of VdF repeat units is preferably not less than 20 % by mole and not more than 90 % by mole, more preferably not less than 40 % by mole and not more than 85 % by mole based on the total number of moles of the VdF repeat units and repeat units derived from other co-monomers. A further preferred lower limit is 45 % by mole, especially preferred lower limit is 50 % by mole, and a further preferred upper limit is 80 % by mole.

With respect to PAVE, perfluoro(methyl vinyl ether) and perfluoro(propyl vinyl ether) are preferred, and especially perfluoro(methyl vinyl ether) is preferred.

Copolymer (B) is selected from VdF/HFP copolymer, VdF/HFP/TFE copolymer, VdF/PAVE copolymer, VdF/TFE/PAVE copolymer, VdF/HFP/PAVE copolymer and VdF/HFP/TFE/PAVE copolymer.

In the VdF/HFP copolymer, a ratio of VdF/HFP is preferably 45 to 85/55 to 15 (mole %), more preferably 50 to 80/50 to 20 (mole %), further preferably 60 to 80/40 to 20 (mole %).

A preferred VdF/HFP/TFE copolymer is one comprising VdF/HFP/TFE in a ratio of 40 to 80/10 to 35/10 to 25 (mole %).

A preferred VdF/PAVE copolymer is one comprising VdF/PAVE in a ratio of 65 to 90/10 to 35 (mole %).

A preferred VdF/TFE/PAVE copolymer is one comprising VdF/TFE/PAVE in a ratio of 40 to 80/3 to 40/15 to 35 (mole %).

A preferred VdF/HFP/PAVE copolymer is one comprising VdF/HFP/PAVE in a ratio of 65 to 90/3 to 25/3 to 25 (mole %).

A preferred VdF/HFP/TFE/PAVE copolymer is one comprising VdF/HFP/TFE/PAVE in a ratio of 40 to 90/0 to 25/0 to 40/3 to 35 (mole %), more preferably one comprising VdF/HFP/TFE/PAVE in a ratio of 40 to 80/3 to 25/3 to 40/3 to 25 (mole %).

It is suitable that the straight chain type fluorine-containing polymer (B) has peroxide-crosslinkable cure site. Examples of the peroxide-crosslinkable cure site are iodine atom, bromine atom and cyano group. Among these, iodine atom is preferred from the viewpoint of good reactivity. For introducing cure sites, there is a method of using, as a chain transfer agent, a compound (for example, polyiodide compound such as RIx) leaving a plurality of peroxide-crosslinkable cure sites as a residue. It is preferable that the straight chain type fluorine-containing polymer (B) contains 0.01 to 8 % by mass, preferably 0.05 to 5 % by mass, especially preferably 0.1 to 3 % by mass of iodine atoms. When the amount of iodine atoms is less than 0.01 % by mass, there is a tendency that crosslinking proceeds insufficiently and compression set is lowered, and when the amount exceeds 8 % by mass, there is a tendency that crosslinking density becomes too high and lowering of performance such as too small elongation occurs.

The straight chain type fluorine-containing polymer (B) is prepared in the same manner as in the preparation of the branched fluorine-containing elastomer (A) except that the preparation is carried out in the absence of the compound represented by the formula (1). However, from the viewpoint of lowering the molecular weight, it is preferable that the iodine compound represented by the general formula (24) is added in a relatively large amount, and the amount of the iodine compound is preferably 0.1 to 3.0 % by mass based on the straight chain type fluorine-containing polymer (B).

The peroxide-crosslinkable fluorine-containing elastomer composition of the present invention can be prepared, for example, by the following methods, but the method is not limited to them.
(1) A method of polymerizing the branched fluorine-containing elastomer (A) and subsequently polymerizing the straight chain type fluorine-containing polymer (B) in the same polymerization reactor (one reactor method).
(2) A method of mixing an aqueous dispersion of the branched fluorine-containing elastomer (A) to an aqueous dispersion of the straight chain type fluorine-containing polymer (B) (wet mixing method).
(3) A method of dry-blending the branched fluorine-containing elastomer (A) and the straight chain type fluorine-containing polymer (B) (dry mixing method).

In the one reactor method, a polymer having a multi-peak molecular weight distribution can be obtained, for example, by polymerizing through an emulsion polymerization method by adding a chain transfer agent during the polymerization. This is a method of firstly preparing the branched fluorine-containing elastomer (A) and then preparing the straight chain type fluorine-containing polymer (B) by adding a chain transfer agent and if necessary, a polymerization catalyst at an optional timing. It is recommendable to use the above-mentioned iodine compound as a chain transfer agent.

The wet mixing method is a method of preparing the fluorine-containing elastomer composition of the present invention, for example, by mixing an aqueous dispersion of the branched fluorine-containing elastomer (A) obtained by emulsion polymerization to an aqueous dispersion of the straight chain type fluorine-containing polymer (B) obtained in the same manner in a specific mixing ratio, and then, after stirring, adding salt water for co-coagulation of the two components.

In the dry mixing method, the fluorine-containing elastomer composition can be obtained by kneading the branched fluorine-containing elastomer (A) and the straight chain type fluorine-containing polymer (B), which have been prepared separately, by using rolls, kneader, Banbury mixer or the like.

Among these methods, the one reactor method and the wet mixing method are preferred from the viewpoint of uniform dispersion of the two components, and especially the one reactor method is preferred from the viewpoint of good productivity.

In the fluorine-containing elastomer composition of the present invention, a mass ratio (A)/(B) of the branched fluorine-containing elastomer (A) to the straight chain type fluorine-containing polymer (B) is preferably 95/5 to 55/45 since characteristics of the branched fluorine-containing elastomer is maintained satisfactorily. The mass ratio is further preferably 90/10 to 60/40 since an action of decreasing viscosity is good and there is no lowering of physical properties in normal state such as elongation.

The fluorine-containing elastomer composition of the present invention can be subjected to crosslinking with a peroxide-crosslinking agent.

Peroxide-crosslinking agents usually used in the field of fluorine-containing elastomers can be used as a crosslinking agent being usable in the present invention.

Examples of a crosslinking agent for a peroxide crosslinking system are organic peroxides such as α,α'-bis(t-butylperoxy)diisopropylbenzene, 2,5-dimethyl-2,5-di(t-butylperoxy)hexane and dicumyl peroxide. A crosslinking agent is not limited to them.

Among these, 2,5-dimethyl-2,5-di(t-butylperaxy)hexane is preferred from the viewpoint of crosslinkability and easy handling.

The amount of crosslinking agent is preferably 0.01 to 10 parts by mass, more preferably 0.1 to 5 parts by mass based on 100 parts by mass of the branched fluorine-containing elastomer (A). When the amount of crosslinking agent is less than 0.01 part by mass, performance of a fluorine-containing molded article tends to be impaired due to insufficient degree of crosslinking, and when the amount exceeds 10 parts by mass, there is a tendency that a crosslinking density becomes too high, which results in increased crosslinking time and is not preferable economically.

It is preferable to use a crosslinking accelerator for a peroxide crosslinking agent. Examples of a crosslinking accelerator are triallyl cyanurate, triallyl isocyanurate (TAIC), tris(diallylamine-s-triazine), triallyl phosphite, N,N-diallylacrylamide, hexaallylphosphoramide, N,N,N',N'-tetraallyltetraphthalamide, N,N,N',N'-tetraallylmalonamide, trivinyl isocyanurate, 2,4,6-trivinylmethyltrisilaxane, tri(5-norbornene-2-methylene)cyanurate and the like. Among these, triallyl isocyanurate (TAIC) is preferred from the viewpoint of crosslinkability and physical properties of a crosslinked article.

An amount of crosslinking accelerator is preferably 0.01 to 10 parts by mass, more preferably 0.1 to 5.0 parts by mass based on 100 parts by mass of the branched fluorine-containing elastomer (A). When the amount of crosslinking accelerator is less than 0.01 part by mass, a crosslinking time tends to be so long to an extent not to be practicable. When the amount of crosslinking accelerator is more than 10 parts by mass, there is a tendency that a crosslinking time is extremely short and in addition, compression set of a molded article is lowered.

Further, usual additives such as filler, processing aid, carbon black, inorganic fillers, metallic oxides such as magnesium oxide and metallic hydroxides such as calcium hydroxide may be used to an extent not to impair the purpose of the present invention.

A Mooney viscosity of the fluorine-containing elastomer composition of the present invention is not limited particularly since an optimum viscosity is selected depending on a molding method. For example, in the case of injection molding, a Mooney viscosity (ML₁₊₁₀) at 100°C is 10 to 110, preferably 20 to 100. When the Mooney viscosity is too high, molding failure tends to occur due to improper flowability, and when the Mooney viscosity is too low, there is a tendency that problem, for example, mixing of foams easily occur.

A method of crosslinking of the composition of the present invention is not limited particularly, and conventional methods, for example, compression molding, extrusion molding, transfer molding and injection molding can be employed.

It is preferable that tensile elongation at break (Eb) of the obtained molded article is 180 to 550 %. When tensile elongation at break is less than 180 %, there is a tendency that so-called "rubber-like" is lost. On the contrary, when tensile elongation at break exceeds 550 %, there is a tendency that a crosslinking density becomes too low and compression set (CS) is lowered. Compression set (CS) of a molded article in compression at 200°C for 72 hours is preferably as small as possible and is preferably not more than 30 %, more preferably not more than 25 %.

Generally as compression set becomes smaller, there is a tendency that tensile elongation at break of a molded article is also decreased. Therefore, it is very difficult to provide a molded article with "properties just like a rubber", namely, both of small compression set and large tensile elongation at break. The present invention made it possible to provide these properties by blending the branched fluorine-containing elastomer (A) having specific physical properties and the straight chain type fluorine-containing polymer (B) having specific physical properties.

Especially the fluorine-containing elastomer composition of the present invention can provide a molded article having well-balanced tensile elongation at break (Eb) and 72-hour compression set (CS), and such a molded article has not been provided. Concretely it is possible to provide a molded article having Eb of 170 to 200 % and CS of not more than 10, a molded article having Eb of 200 to 230 % and CS of not more than 13 %, a molded article having Eb of 230 to 260 % and CS of not more than 14 %, a molded article having Eb of 260 to 290 % and CS of not more than 18 %, and a molded article having Eb of 290 to 320 % and CS of not more than 20 %.

Here, elongation at break (Eb) and Compression set (CS) in compression at 200°C for 72 hours are values obtained when using a molded article obtained by crosslinking the composition of standard formulation under standard crosslinking conditions explained infra.

The composition of the present invention can provide molded articles to be suitably used in the fields of semiconductor-related applications such as semiconductor manufacturing equipment, liquid crystal panel manufacturing equipment, plasma panel manufacturing equipment, plasma address liquid crystal panel, field emission display panel and substrate for solar cell, automobile application, airplane application, rocket application, ship application, chemical application in chemical plant, pharmaceutical application such as medicines, photograph application such as developing machine, printing application such as printing machine, coating application such as coating facilities, application to food plant equipment, application to atomic power plant equipment, application to steel making such as steel sheet processing facilities, general industrial application, application to fuel cell and application to electronic parts.

### EXAMPLE

The present invention is then explained by means of examples.

### <Weight average molecular weight (Mw) and number average molecular weight (Mn)>

Equipment: HLC-8020 (available from TOSO CORPORATION)
   Column:
      Two GPC KF-806M columns
      One GPC KF-801 column
      One GPC KF-802 column
   Detector: Differential refractometer
   Developing solvent: Tetrahydrofuran
   Temperature: 35°C
   Concentration of sample: 0.1 % by weight
   Standard sample: Various monodisperse polystyrenes ((Mw/Mn) = 1.14 (Max)), TSK Standard POLYSTYRENE (available from TOSO CORPORATION)

### <Mooney viscosity>

Mooney viscosity is measured according to ASTM-D1646 and JIS K6300-1.
Measuring equipment: Automatic Mooney viscometer available from Kabushiki Kaisha Ueshima Seisakusho
Number of revolutions of rotor: 2 rpm
Measuring temperature: 100°C (in some cases 60°C)

### <Absolute weight molecular weight, intrinsic viscosity>

Equipment: GPCmax-TDA302 system (Viscotech Co., Ltd.)
Detector: RI (differential refractometer), VISC (viscometer), LALLS (low angle light scattering detector), RALLS (right angle light scattering detector)
Analysis software: Viscotech Omin SEC
Column: Two TSKgelGMHRH columns
Developing solvent: HCFC-225/HFIP (10 %)
Temperature: 30°C
Concentration of sample: 0.4 % by mass
Standard sample: PMMA

### <Mark-Houwink gradient "a">

GPC is measured using GPC-light scattering-viscometer system, and in a molecular weight range where peaks are detected with RI detector, a gradient "a" is calculated as an average value of inclinations of tangents at each point.

### <Compression set>

The components of the following standard formulations are subjected to primary press-vulcanization and secondary oven-vulcanization under the following standard vulcanization conditions to make O-ring (P-24). According to JIS-K6301, compression set after the primary press-vulcanization and compression set (CS) after the secondary oven-vulcanization are measured (Measuring is carried out by using a sample subjected to holding at 200°C for 72 hours under 25 % compression and then allowing to stand for 30 minutes in a 25°C constant temperature chamber).

### (Standard Formulation 1)

| | |
|---|---|
| Fluorine-containing elastomer | 100 parts by mass |
| Triallyl isocyanurate (TAIC) | 4 parts by mass |
| PERHEXA 25B | 1.5 parts by mass |
| Carbon black MT-C | 20 parts by mass |
| (Standard Formulation 2) | |
| Fluorine-containing elastomer | 100 parts by mass |
| Triallyl isocyanurate (TAIC) | 3 parts by mass |
| PERHEXA 25B | 1.5 parts by mass |
| Carbon black MT-C | 20 parts by mass |

### (Standard Vulcanization Conditions)

Kneading method: Kneading with rolls
Press-vulcanization: at 160°C for 10 minutes
Oven-vulcanization: at 180°C for 4 hours

<100 % modulus (M100)>

The components of the above-mentioned standard formulation are subjected to primary press-vulcanization and secondary oven-vulcanization under the above-mentioned standard vulcanization conditions to make a 2 mm thick sheet, and 100 % modulus is measured according to JIS-K6251.

### <Tensile strength at break (Tb) and tensile elongation at break (Eb)>

The components of the above-mentioned standard formulation are subjected to primary press-vulcanization and secondary oven-vulcanization under the above-mentioned standard vulcanization conditions to make a 2 mm thick sheet, and measurement is carried out according to JIS-K6251.

### <Hardness (Hs)>

The components of the above-mentioned standard formulation are subjected to primary press-vulcanization and secondary oven-vulcanization under the above-mentioned standard vulcanization conditions to make a 2 mm thick sheet, and measurement is carried out according to JIS-K6253.

### <Vulcanization characteristics>

A vulcanization curve at 170°C is obtained at the primary press-vulcanization with a JSR Curastometer Model II and Model V and then a minimum viscosity (ML), degree of vulcanization (MH), induction time (T₁₀) and optimum vulcanization time (T₉₀) are obtained.

### <Analysis of composition>

Measurement is carried out using ¹⁹F-NMR (Model AC300P available from Bruker). For a polymer comprising TFE, measurement is carried out using ¹⁹F-NMR (Model FX100 available from JEOL Ltd.)

### <Elemental analysis>

Measurement is carried out using Model G2350A available from Yokogawa Hewlett Packard Co., Ltd.

### REFERENCE EXAMPLE 1

### (Preparation of branched fluorine-containing elastomer (A-1))

A 3-liter polymerization reactor provided with an electromagnetic induction stirrer as a stirrer was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, and was brought to reduced pressure, and this operation was repeated five times. Under reduced pressure, 35 g of VdF, 42 g of TFE and 1,090 g of HFP were charged, and the reactor was heated up to 80°C with stirring. Then, 0.24 g of APS dissolved in 10 g of pure water was introduced with pressurized nitrogen gas to initiate polymerization, and the polymerization was continued under the following conditions of (a), (b), (c), (d) and (e). Four hours after, the stirring was stopped and monomers were discharged to terminate the polymerization.
(a) Calculations of critical temperature and critical pressure by Peng-Robinson method for VdF/TFE/HFP = 6.5/5.0/88.5 (mole %) in the polymerization reactor were carried out using Aspen Plus Ver. 11.1, and as a result, Tc was 87.7°C and Pc was 3.05 MPa. Further, according to conversion with a temperature conversion factor of TR 0.95 and a pressure conversion factor of PR 0.80, T was 69.7°C and P was 2.44 MPa. Here, the polymerization conditions (80°C, 3.5 MPa) were higher than the reduced temperature and the reduced pressure, respectively.
(b) A monomer mixture of VdF/TFE/HFP (65.5/25.3/9.2 (mole %)) was continuously supplied to keep the pressure of the gas phase portion at 3.5 MPa. By the time of completion of the polymerization, 400 g of the monomer mixture was supplied to the reactor.
(c) The stirring speed was kept at 560 rpm.
(d) When 8 g of the monomer mixture described in (b) (2 % by mass based on the total amount of additional monomer mixture) was supplied, 2.059 g of octafluoro-1,4-diiodobutane (0.33 part by mass based on 100 parts by mass of the fluorine-containing elastomer) was introduced with pressurized nitrogen gas, and when another 28 g of the monomer mixture described in (b) (7 % by mass based on the total amount of additional monomer mixture) was supplied, 6.86 g of IM monomer (CF₂=CFOCF₂CF₂CH₂I) (1.1 parts by mass based on 100 parts by mass of the target fluorine-containing elastomer) was introduced with pressurized nitrogen gas.
(e) The addition of the IM monomer was terminated when 28 g of the monomer mixture described in (b) (7 % by mass based on the total amount of additional monomer mixture) was added.

The weight of the obtained emulsion was 2,343 g, and the polymer concentration was 26.7 % by mass. The weight of the fluorine-containing elastomer was 626 g, the weight average molecular weight Mw measured by GPC was 96,000, the number average molecular weight Mn was 61,000, and Mw/Mn was 1.56. The proportions of the monomers of the polymer measured by ¹⁹F-NMR was VdF/TFE/HFP = 50.2/19.9/29.9 (mole %). The Mooney viscosity at 100°C was 70.

The Mark-Houwink gradient "a" of this fluorine-containing elastomer (A-1) calculated by plotting in Mark-Houwink plot was 0.44.

### REFERENCE EXAMPLE 2

### (Preparation of branched fluorine-containing elastomer (A-2))

Preparation was carried out in the same manner as in Reference Example 1 except that 1.45 g of octafluoro-1,4-diiodobutane (0.26 part by mass based on 100 parts by mass of the fluorine-containing elastomer) and 5.1 g of IM monomer (CF₂=CFOCF₂CF₂CH₂I) (0.85 part by mass based on 100 parts by mass of the target fluorine-containing elastomer) were used in the condition (d) described in Reference Example 1.

The weight of the obtained emulsion was 2,182 g, and the polymer concentration was 27.6 % by mass. The weight of the fluorine-containing elastomer was 602 g, the weight average molecular weight Mw measured by GPC was 179,000, the number average molecular weight Mn was 101,000, and Mw/Mn was 1.76. The proportions of the monomers of the polymer measured by ¹⁹F-NMR was VdF/TFE/HFP = 51/20/29 (mole %). The Mooney viscosity at 100°C was 105.

The Mark-Houwink gradient "a" of this fluorine-containing elastomer (A-2) calculated by plotting in Mark-Houwink plot was 0.46.

### REFERENCE EXAMPLE 3

### (Preparation of straight chain type fluorine-containing polymer (B-1))

The same 3-liter polymerization reactor provided with a stirrer as in Reference Example 1 was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, and was brought to reduced pressure, and this operation was repeated five times. Under reduced pressure, 35 g of VdF, 42 g of TFE and 1,090 g of HFP were charged, and the reactor was heated up to 80°C with stirring. Then, 0.24 g of APS dissolved in 10 g of pure water was introduced with pressurized nitrogen gas to initiate polymerization, and the polymerization was continued under the following conditions of (a), (b), (c) and (d). Three hours after, the stirring was stopped and monomers were discharged to terminate the polymerization.
(a) Calculations of critical temperature and critical pressure by Peng-Robinson method for VdF/TFE/HFP = 6.5/5.0/88.5 (mole %) in the polymerization reactor were carried out using Aspen Plus Ver. 11.1, and as a result, Tc was 87.7°C and Pc was 3.05 MPa. Further, according to conversion with a temperature conversion factor of TR 0.95 and a pressure conversion factor of PR 0.80, T was 69.7°C and P was 2.44 MPa. Here, the polymerization conditions (80°C, 3.5 MPa) were higher than the reduced temperature and the reduced pressure, respectively.
(b) A monomer mixture of VdF/TFE/HFP (65.5/25.3/9.2 (mole %)) was continuously supplied to keep the pressure of the gas phase portion at 3.5 MPa. By the time of completion of the polymerization, 400 g of the monomer mixture was supplied to the reactor.
(c) The stirring speed was kept at 560 rpm.
(d) When 8 g of the monomer mixture described in (b) (2 % by mass based on the total amount of additional monomer mixture) was supplied, 13.3 g of octafluoro-1,4-diiodobutane (1.8 parts by mass based on 100 parts by mass of the fluorine-containing elastomer) was introduced with pressurized nitrogen gas.

The weight of the obtained emulsion was 2,442 g, and the polymer concentration was 26.6 % by mass. The weight of the fluorine-containing elastomer was 650 g, the weight average molecular weight Mw measured by GPC was 24,000, the number average molecular weight Mn was 22,000, and Mw/Mn was 1.14. The polymer was an elastomeric fluorine-containing polymer having the proportions of the monomers measured by ¹⁹F-NMR of VdF/TFE/HFP = 49.2/20.1/30.7 (mole %). The Mooney viscosity at 60°C was 7.

The Mark-Houwink gradient "a" of this fluorine-containing polymer (B-1) calculated by plotting in Mark-Houwink plot was 0.75.

### REFERENCE EXAMPLE 4

### (Preparation of straight chain type fluorine-containing polymer (B-2))

The same 3-liter polymerization reactor provided with a stirrer as in Reference Example 1 was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, and was brought to reduced pressure, and this operation was repeated five times. Under reduced pressure, 35 g of VdF, 42 g of TFE and 1,090 g of HFP were charged, and the reactor was heated up to 80°C with stirring. Then, 0.24 g of APS dissolved in 10 g of pure water was introduced with pressurized nitrogen gas to initiate polymerization, and the polymerization was continued under the following conditions of (a), (b), (c) and (d). 2.2 hours after, the stirring was stopped and monomers were discharged to terminate the polymerization.
(a) Calculations of critical temperature and critical pressure by Peng-Robinson method for VdF/TFE/HFP = 6.5/5.0/88.5 (mole %) in the polymerization reactor were carried out using Aspen Plus Ver. 11.1, and as a result, Tc was 87.7°C and Pc was 3.05 MPa. Further, according to conversion with a temperature conversion factor of TR 0.95 and a pressure conversion factor of PR 0.80, T was 69.7°C and P was 2.44 MPa. Here, the polymerization conditions (80°C, 3.5 MPa) were higher than the reduced temperature and the reduced pressure, respectively.
(b) A monomer mixture of VdF/TFE/HFP (65.5/25.3/9.2 (mole %)) was continuously supplied to keep the pressure of the gas phase portion at 3.5 MPa. By the time of completion of the polymerization, 400 g of the monomer mixture was supplied to the reactor.
(c) The stirring speed was kept at 560 rpm.
(d) When 8 g of the monomer mixture described in (b) (2 % by mass based on the total amount of additional monomer mixture) was supplied, 3.7 g of octafluoro-1,4-diiodobutane (0.57 part by mass based on 100 parts by mass of the fluorine-containing elastomer) was introduced with pressurized nitrogen gas.

The weight of the obtained emulsion was 2,422 g, and the polymer concentration was 26.8 % by mass. The weight of the fluorine-containing elastomer was 650 g, the weight average molecular weight Mw measured by GPC was 93,000, the number average molecular weight Mn was 80,000, and Mw/Mn was 1.16. The polymer was an elastomeric fluorine-containing polymer having the proportions of the monomers measured by ¹⁹F-NMR of VdF/TFE/HFP = 49.5/20.0/30.5 (mole %). The Mooney viscosity at 100°C was 32.

The Mark-Houwink gradient "a" of this fluorine-containing polymer (B-1) calculated by plotting in Mark-Houwink plot was 0.77.

### EXAMPLE 1

90 Parts by mass of an aqueous dispersion of the branched fluorine-containing elastomer (A-1) prepared in Reference Example 1 was mixed with 10 parts by mass of an aqueous dispersion of the straight chain type fluorine-containing polymer (B-1) prepared in Reference Example 3, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-1) and the straight chain type fluorine-containing polymer (B-1) in a mass ratio of 90/10. The Mooney viscosity at 100°C of the obtained fluorine-containing elastomer composition was 55.

The obtained fluorine-containing elastomer composition was evaluated according to the methods of evaluation mentioned above. The results are shown in Table 1.

### EXAMPLE 2

80 Parts by mass of an aqueous dispersion of the branched fluorine-containing elastomer (A-1) prepared in Reference Example 1 was mixed with 20 parts by mass of an aqueous dispersion of the straight chain type fluorine-containing polymer (B-1) prepared in Reference Example 3, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-1) and the straight chain type fluorine-containing polymer (B-1) in a mass ratio of 80/20. The Mooney viscosity at 100°C of the obtained fluorine-containing elastomer composition was 42.

The obtained fluorine-containing elastomer composition was evaluated according to the methods of evaluation mentioned above. The results are shown in Table 1.

### EXAMPLE 3

A 3-liter polymerization reactor provided with an electromagnetic induction stirrer as a stirrer was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, and was brought to reduced pressure, and this operation was repeated five times. Under reduced pressure, 35 g of VdF, 42 g of TFE and 1,090 g of HFP were charged, and the reactor was heated up to 80°C with stirring. Then, 0.24 g of APS dissolved in 10 g of pure water was introduced with pressurized nitrogen gas to initiate polymerization, and the polymerization was continued under the following conditions of (a), (b), (c), (d) and (e). Four hours after, the stirring was stopped and monomers were discharged to terminate the polymerization.
(a) Calculations of critical temperature and critical pressure by Peng-Robmson method for VdF/TFE/HFP = 6.5/5.0/88.5 (mole %) in the polymerization reactor were carried out using Aspen Plus Ver. 11.1, and as a result, Tc was 87.7°C and Pc was 3.05 MPa. Further, according to conversion with a temperature conversion factor of TR 0.95 and a pressure conversion factor of PR 0.80, T was 69.7°C and P was 2.44 MPa. Here, the polymerization conditions (80°C, 4.5 MPa) were higher than the reduced temperature and the reduced pressure, respectively.
(b) A monomer mixture of VdF/TFE/HFP (65.5/25.3/9.2 (mole %)) was continuously supplied to keep the pressure of the gas phase portion at 3.5 MPa. By the time of completion of the polymerization, 400 g of the monomer mixture was supplied to the reactor.
(c) The stirring speed was kept at 560 rpm.
(d) When 8 g of the monomer mixture described in (b) (2 % by mass based on the total amount of additional monomer mixture) was supplied, 1.65 g of octafluoro-l,4-diiodobutane (0.26 part by mass based on 100 parts by mass of the fluorine-containing elastomer) was introduced with pressurized nitrogen gas, and further when another 28 g of the monomers mixture described in (b) (7 % by mass based on the total amount of additional monomer mixture) was supplied, 4.8 g of IM monomer (CF₂=CFOCF₂CF₂CH₂I) (0.76 part by mass based on 100 parts by mass of the target fluorine-containing elastomer) was introduced with pressurized nitrogen gas, and further when another 307 g of the monomer mixture described in (b) (76.8 % based on the total amount of additional monomer mixture) was supplied, 2.66 g of octafluoro-1,4-diiodobutane (0.42 part by mass based on 100 parts by mass of the fluorine-containing elastomer) was introduced with pressurized nitrogen gas.
(e) The addition of the IM monomer was terminated when 28 g of the monomer mixture described in (b) (7 % by mass based on the total amount of additional monomer mixture) was added. Namely, the IM monomer was added once in (d).

The weight of the obtained emulsion was 2,350 g, and the polymer concentration was 26.8 % by mass. The weight of the fluorine-containing elastomer was 630 g, the weight average molecular weight Mw measured by GPC was 116,000, the number average molecular weight Mn was 58,000, and Mw/Mn was 1.99. The proportions of the monomers of the polymer measured by ¹⁹F-NMR was VdF/TFE/HFP = 50.2/19.9/29.9 (mole %). This composition was one comprising the branched fluorine-containing elastomer (A) and the straight chain type fluorine-containing polymer (B) in a mass ratio of 77/23. The Mooney viscosity at 100°C of the composition was 45.

The obtained fluorine-containing elastomer composition was evaluated according to the methods of evaluation mentioned above. The results are shown in Table 1.

### EXAMPLE 4

80 Parts by mass of an aqueous dispersion of the branched fluorine-containing elastomer (A-1) prepared in Reference Example 1 was mixed with 20 parts by mass of an aqueous dispersion of the straight chain type fluorine-containing polymer (B-2) prepared in Reference Example 4, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-1) and the straight chain type fluorine-containing polymer (B-2) in a mass ratio of 80/20. The Mooney viscosity at 100°C of the obtained fluorine-containing elastomer composition was 66.

The obtained fluorine-containing elastomer composition was evaluated according to the methods of evaluation mentioned above. The results are shown in Table 1.

### COMPARATIVE EXAMPLE 1

Evaluation was carried out using only the branched fluorine-containing elastomer (A-1) prepared in Reference Example 1 according to the methods of evaluation mentioned above. The results are shown in Table 1.

### COMPARATIVE EXAMPLE 2

Evaluation was carried out using only the straight chain type elastomeric fluorine-containing polymer (B-1) prepared in Reference Example 3 according to the methods of evaluation mentioned above. The results are shown in Table 1.

### COMPARATIVE EXAMPLE 3

Evaluation was carried out using only the straight chain type elastomeric fluorine-containing polymer (B-2) prepared in Reference Example 4 according to the methods of evaluation mentioned above. The results are shown in Table 1.

**TABLE 1**

| | unit | Example | | | |
|---|---|---|---|---|---|
| | | 1 | 2 | 3 | 4 |
| Fluorine-containing elastomer composition | | | | | |
| Branched fluorine-containing elastomer (A) | | A-1 | A-1 | - | A-1 |
| Number average molecular weight (×10⁴) | | 6.1 | 6.1 | - | 6.1 |
| Amount | part by mass | 90 | 80 | - | 80 |
| Straight chain type fluorine-containing polymer (B) | | B-1 | B-1 | - | B-2 |
| Number average molecular weight (×10⁴) | | 2.2 | 2.2 | - | 8.0 |
| Amount | part by mass | 10 | 20 | - | 20 |
| Iodine content | % by mass | 0.45 | 0.49 | 0.5 | 0.39 |
| Mooney viscosity (ML₁₊₁₀, 100°C) | | 55 | 42 | 45 | 66 |
| Formulation | | Standard 1 | Standard 1 | Standard 1 | Standard 1 |
| Crosslinking conditions | | Standard | Standard | Standard | Standard |
| Vulcanization characteristics (Curast Model II: 160°C) | | | | | |
| Minimum torque (ML) | kgf | 0.075 | 0.045 | 0.05 | 0.13 |
| Degree of vulcanization (MH) | kgf | 4.565 | 4.365 | 4.43 | 4.38 |
| Induction time (T10) | min | 0.8 | 0.8 | 0.8 | 0.82 |
| Optimum vulcanization time (T90) | min | 2.3 | 2.1 | 2.3 | 3.2 |
| Physical properties in normal state | | | | | |
| 100 % modulus | MPa | 5.6 | 5.6 | 5.4 | 4.4 |
| Tensile strength at break | MPa | 17.9 | 19.6 | 20 | 22.0 |
| Tensile elongation at break | % | 200 | 210 | 200 | 230 |
| Hardness (Shore A) peak value | | 73.2 | 72.4 | 71.5 | 70.6 |
| Compression set (200°C × 72 hrs) | % | 12 | 11 | 12 | 13 |
| After heat aging (275°C × 72 hrs) | | | | | |
| Change rate in 100 % modulus | % | -66.1 | -66.1 | -66.0 | -67.2 |
| Change rate in tensile strength at break | % | -43.6 | -54.1 | -51.0 | -52.4 |
| Change rate in tensile elongation at break | % | 111.4 | 90.0 | 100.0 | 95.2 |
| Change rate in hardness (Shore A) peak value | point | -2.2 | -0.5 | -1.0 | -0.8 |

| | unit | Comparative Example | | | |
|---|---|---|---|---|---|
| | | 1 | 2 | 3 | |
| Fluorine-containing elastomer composition | | | | | |
| Branched fluorine-containing elastomer (A) | | A-1 | - | - | |
| Number average molecular weight (×10⁴) | | 6.1 | - | - | |
| Amount | part by mass | 100 | - | - | |
| Straight chain type fluorine-containing polymer (B) | | - | B-1 | B-2 | |
| Number average molecular weight (×10⁴) | | - | 2.2 | 8.0 | |
| Amount | part by mass | - | 100 | 100 | |
| Iodine content | % by mass | 0.41 | 0.8 | 0.22 | |
| Mooney viscosity (ML₁₊₁₀, 100°C) | | 70 | <5 | 32 | |
| Formulation | | Standard 1 | Standard 1 | Standard 1 | |
| Crosslinking conditions | | Standard | Standard | Standard | |
| Vulcanization characteristics (Curast Model II: 160°C) | | | | | |
| Minimum torque (ML) | kgf | 0.11 | 0.01 | 0.08 | |
| Degree of vulcanization (MH) | kgf | 3.68 | 1.93 | 3.68 | |
| Induction time (T10) | min | 0.8 | 1 | 0.88 | |
| Optimum vulcanization time (T90) | min | 2 | 2.9 | 2.6 | |
| Physical properties in normal state | | | | | |
| 100 % modulus | MPa | 5.8 | 6 | 3.9 | |
| Tensile strength at break | MPa | 18.1 | 12.7 | 17.6 | |
| Tensile elongation at break | % | 220 | 160 | 210 | |
| Hardness (Shore A) peak value | | 72 | 75.8 | 71.9 | |
| Compression set (200°C × 72 hrs) | % | 11 | 18 | 16 | |
| After heat aging (275°C × 72 hrs) | | | | | |
| Change rate in 100 % modulus | % | -66.0 | -57.1 | -67.5 | |
| Change rate in tensile strength at break | % | -56.9 | -90.0 | -92.3 | |
| Change rate in tensile elongation at break | % | 109.1 | 229.4 | 235.1 | |
| Change rate in hardness (Shore A) peak value | point | -1.0 | -1.1 | -1.0 | |

From the results shown in Table 1, it is seen that even when the straight chain type fluorine-containing polymer (B) is blended to the branched fluorine-containing elastomer (A), physical properties of the branched fluorine-containing elastomer (A) are maintained.

### EXAMPLE 5

80 Parts by mass of an aqueous dispersion of the branched fluorine-containing elastomer (A-2) prepared in Reference Example 2 was mixed with 20 parts by mass of an aqueous dispersion of the straight chain type fluorine-containing polymer (B-1) prepared in Reference Example 3, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-2) and the straight chain type fluorine-containing polymer (B-1) in a mass ratio of 80/20. The Mooney viscosity at 100°C of the obtained fluorine-containing elastomer composition was 65.

The obtained fluorine-containing elastomer composition was evaluated according to the methods of evaluation mentioned above. The results are shown in Table 2.

### EXAMPLE 6

60 Parts by mass of an aqueous dispersion of the branched fluorine-containing elastomer (A-2) prepared in Reference Example 2 was mixed with 40 parts by mass of an aqueous dispersion of the straight chain type fluorine-containing polymer (B-1) prepared in Reference Example 3, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-2) and the straight chain type fluorine-containing polymer (B-1) in a mass ratio of 60/40. The Mooney viscosity at 100°C of the obtained fluorine-containing elastomer composition was 39.

The obtained fluorine-containing elastomer composition was evaluated according to the methods of evaluation mentioned above. The results are shown in Table 2.

### COMPARATIVE EXAMPLE 4

Evaluation was carried out using only the branched fluorine-containing elastomer (A-2) prepared in Reference Example 2 according to the methods of evaluation mentioned above. The results are shown in Table 2.

**TABLE 2**

| | unit | Example | | Com. Ex. |
|---|---|---|---|---|
| | | 5 | 6 | 4 |
| Fluorine-containing elastomer composition | | | | |
| Branched fluorine-containing elastomer (A) | | A-2 | A-2 | A-2 |
| Number average molecular weight (×10⁴) | | 10 | 10 | 10 |
| Amount | part by mass | 80 | 60 | 100 |
| Straight chain type fluorine-containing polymer (B) | | B-1 | B-1 | - |
| Number average molecular weight (×10⁴) | | 2.2 | 2.2 | - |
| Amount | part by mass | 20 | 40 | 0 |
| Iodine content | % by mass | 0.42 | 0.52 | 0.33 |
| Mooney viscosity (ML₁₊₁₀, 100°C) | | 65 | 39 | 105 |
| Formulation | | Standard 1 | Standard 1 | Standard 1 |
| Crosslinking conditions | | Standard | Standard | Standard |
| Vulcanization characteristics (Curast Model II: 160°C) | | | | |
| Minimum torque (ML) | kgf | 0.135 | 0.055 | 0.265 |
| Degree of vulcanization (MH) | kgf | 4.575 | 4.655 | 4.575 |
| Induction time (T10) | min | 0.8 | 0.9 | 0.8 |
| Optimum vulcanization time (T90) | min | 2.2 | 2.2 | 2.3 |
| Physical properties in normal state | | | | |
| 100 % modulus | MPa | 4.3 | 4.4 | 4.6 |
| Tensile strength at break | MPa | 20 | 18.8 | 18.6 |
| Tensile elongation at break | % | 225 | 200 | 220 |
| Hardness (Shore A) peak value | | 71.3 | 73 | 70.8 |
| Compression set (200°C × 72 hrs) | % | 13.5 | 14 | 13.9 |
| After heat aging (275°C × 72 hrs) | | | | |
| Change rate in 100 % modulus | % | -60.5 | -63.6 | -60.9 |
| Change rate in tensile strength at break | % | -56.8 | -51.6 | -55.4 |
| Change rate in tensile elongation at break | % | 75.6 | 90.0 | 72.7 |
| Change rate in hardness (Shore A) peak value | point | -1.2 | -2.7 | -1.5 |

From the results shown in Table 2, it is seen that even when the straight chain type fluorine-containing polymer (B) is blended to the branched fluorine-containing elastomer (A), physical properties of the branched fluorine-containing elastomer (A) are maintained.

### REFERENCE EXAMPLE 5

### (Preparation of branched fluorine-containing elastomer (A-3))

A 3-liter polymerization reactor provided with an electromagnetic stirrer as a stirrer was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, followed by decrease in pressure, and this operation was repeated five times and the inside of the system was brought to reduced pressure. Subsequently, a pressurized monomer mixture of VdF/HFP = 42/58 was charged and a temperature was raised so that the inside of the reactor was brought to 80°C and 6 MPa. Then, 0.086 g of ammonium persulfate (APS) dissolved in 10 g of pure water was introduced with pressurized nitrogen gas to initiate polymerization, and the polymerization was continued under the conditions of (a), (b), (c) and (d). The stirring was stopped 2.1 hours after and monomers were discharged to terminate the polymerization.
(a) As the polymerization proceeded, when the inside pressure began to decrease, a monomer mixture of VdF/HFP (78/22 in mole %) was continuously charged to maintain the inside pressure at 6 MPa. By the time of completion of the polymerization, 470 g of the monomer mixture was supplied to the reactor.
(b) The stirring speed was kept at 600 rpm.
(c) When 9.4 g of the monomer mixture described in (a) (2 % by mass based on the total amount of additional monomer mixture) was supplied, 2.15 g of octafluoro-1,4-diiodobutane (0.33 part by mass based on 100 parts by mass of the fluorine-containing elastomer) was introduced with pressurized nitrogen gas, and when another 33 g of the monomer mixture described in (a) (7 % by mass based on the total amount of additional monomer mixture) was supplied, 7.2 g of IM monomer (CF₂=CFOCF₂CF₂CH₂I) (1.1 parts by mass based on 100 parts by mass of the target fluorine-containing elastomer) was introduced with pressurized nitrogen gas.
(d) The addition of the IM monomer was terminated when 7.2 g of the monomer mixture described in (a) (7 % by mass based on the total amount of additional monomer mixture) was added.

The weight of the obtained emulsion was 2,289 g, and the polymer concentration was 28.4 % by mass. The weight of the fluorine-containing elastomer was 650 g, the weight average molecular weight Mw measured by GPC was 98,000, the number average molecular weight Mn was 63,000, and Mw/Mn was 1.56. The polymer was one having the proportions of the monomers measured by ¹⁹F-NMR of VdF/HFP = 78.0/22.0 (mole %). The Mooney viscosity at 100°C was 67.

The Mark-Houwink gradient "a" of this fluorine-containing elastomer (A-3) calculated by plotting in Mark-Houwink plot was 0.43.

### REFERENCE EXAMPLE 6

### (Preparation of straight chain type fluorine-containing polymer (B-3))

A 3-liter polymerization reactor provided with an electromagnetic stirrer as a stirrer was charged with 1,730 g of pure water, 1.73 g of C₅F₁₁CHOONH₄ and 0.173 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, followed by decrease in pressure, and this operation was repeated five times and the inside of the system was brought to reduced pressure. Subsequently, a pressurized monomer mixture of VdF/HFP = 42/58 was charged and a temperature was raised so that the inside of the reactor was brought to 80°C and 6 MPa. Then, 0.086 g of ammonium persulfate (APS) dissolved in 10 g of pure water was introduced with pressurized nitrogen gas to initiate polymerization, and the polymerization was continued under the conditions of (a), (b) and (c). The stirring was stopped 2.9 hours after and monomers were discharged to terminate the polymerization.
(a) As the polymerization proceeded, when the inside pressure began to decrease, a monomer mixture of VdF/HFP (78/22 in mole %) was continuously charged to maintain the inside pressure at 6 MPa. By the time of completion of the polymerization, 470 g of the monomer mixture was supplied to the reactor.
(b) The stirring speed was kept at 600 rpm.
(c) When 9.4 g of the monomer mixture described in (a) (2 % by mass based on the total amount of additional monomer mixture) was supplied, 13.3 g of octafluoro-1,4-diiodobutane (2.0 parts by mass based on 100 parts by mass of the fluorine-containing elastomer) was introduced with pressurized nitrogen gas.

The weight of the obtained emulsion was 2,272 g, and the polymer concentration was 28.7 % by mass. The weight of the fluorine-containing elastomer was 651 g, the weight average molecular weight Mw measured by GPC was 26,000, the number average molecular weight Mn was 23,000, and Mw/Mn was 1.13. The polymer was one having the proportions of the monomers measured by ¹⁹F-NMR of VdF/HFP = 78.0/22.0 (mole %). The Mooney viscosity at 60°C was 8.

The Mark-Houwink gradient "a" of this fluorine-containing elastomer (B-3) calculated by plotting in Mark-Houwink plot was 0.76.

### EXAMPLE 7

80 Parts by mass of an aqueous dispersion of the branched fluorine-containing elastomer (A-3) prepared in Reference Example 5 was mixed with 20 parts by mass of an aqueous dispersion of the straight chain type fluorine-containing polymer (B-3) prepared in Reference Example 6, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-3) and the straight chain type fluorine-containing polymer (B-3) in a mass ratio of 80/20. The Mooney viscosity at 100°C of the obtained fluorine-containing elastomer composition was 40.

The obtained fluorine-containing elastomer composition was evaluated according to the methods of evaluation mentioned above. The results are shown in Table 3.

### COMPARATIVE EXAMPLE 5

Evaluation was carried out using only the branched fluorine-containing elastomer (A-3) prepared in Reference Example 5 according to the methods of evaluation mentioned above. The results are shown in Table 3.

### COMPARATIVE EXAMPLE 6

Evaluation was carried out using only the straight chain type elastomeric fluorine-containing polymer (B-3) prepared in Reference Example 6 according to the methods of evaluation mentioned above. The results are shown in Table 3.

**TABLE 3**

| | unit | Example | Comparative Example | |
|---|---|---|---|---|
| | | 7 | 5 | 6 |
| Fluorine-containing elastomer composition | | | | |
| Branched fluorine-containing elastomer (A) | | A-3 | A-3 | - |
| Number average molecular weight (×10⁴) | | - | - | - |
| Amount | part by mass | 80 | 100 | - |
| Straight chain type fluorine-containing polymer (B) | | B-3 | - | B-3 |
| Number average molecular weight (×10⁴) | | - | - | - |
| Amount | part by mass | 20 | - | 100 |
| Iodine content | % by mass | 0.44 | 0.41 | 0.82 |
| Mooney viscosity (ML₁₊₁₀, 100°C) | | 40 | 67 | <5 |
| Formulation | | Standard 1 | Standard 1 | Standard 1 |
| Crosslinking conditions | | Standard | Standard | Standard |
| Vulcanization characteristics (Curast Model II: 160°C) | | | | |
| Minimum torque (ML) | kgf | 0.05 | 0.12 | 0.01 |
| Degree of vulcanization (MH) | kgf | 3.24 | 2.65 | 1.62 |
| Induction time (T10) | min | 0.8 | 0.8 | 1.1 |
| Optimum vulcanization time (T90) | min | 2.1 | 2.0 | 3.0 |
| Physical properties in normal state | | | | |
| 100 % modulus | MPa | 3.0 | 3.1 | 3.6 |
| Tensile strength at break | MPa | 18.1 | 17.6 | 15.3 |
| Tensile elongation at break | % | 250 | 240 | 160 |
| Hardness (Shore A) peak value | | 67 | 67 | 69 |
| Compression set (200°C x 72 hrs) | % | 13 | 13 | 19 |

From the results shown in Table 3, it is seen that even when the straight chain type fluorine-containing polymer (B) is blended to the branched fluorine-containing elastomer (A), physical properties of the branched fluorine-containing elastomer (A) are maintained.

### REFERENCE EXAMPLE 7

### (Preparation of branched fluorine-containing elastomer (A-4))

A 3-liter polymerization reactor provided with an electromagnetic stirrer as a stirrer was charged with 1,730 g of pure water, 3.46 g of C₅F₁₁CHOONH₄. and 0.0865 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, followed by decrease in pressure, and this operation was repeated five times and the inside of the system was brought to reduced pressure. Subsequently, a pressurized monomer mixture of VdF/TFE/PMVE = 65/6/29 (mole %) was charged and a temperature was raised so that the inside of the reactor was brought to 80°C and 1.47 MPa. Then, 0.0173 g of ammonium persulfate (APS) dissolved in 10 g of pure water was introduced with pressurized nitrogen gas to initiate polymerization, and the polymerization was continued under the conditions of (a), (b) and (c). The stirring was stopped 14 hours after and monomers were discharged to terminate the polymerization. 0.0082 g of APS was additionally added every three hours.
(a) As the polymerization proceeded, when the inside pressure began to decrease, a monomer mixture of VdF/TFE/PMVE (68/12/20 in mole %) was continuously charged to maintain the inside pressure at 1.47 MPa. By the time of completion of the polymerization, 620 g of the monomer mixture was supplied to the reactor.
(b) The stirring speed was kept at 600 rpm.
(c) When 12.4 g of the monomer mixture described in (a) (2 % by mass based on the total amount of additional monomer mixture) was supplied, 1.87 g of octafluoro-1,4-diiodobutane (0.24 part by mass based on 100 parts by mass of the fluorine-containing elastomer) was introduced with pressurized nitrogen gas, and when another 31 g of the monomer mixture described in (a) (5 % by mass based on the total amount of additional monomer mixture) was supplied, 3.83 g of IM monomer (CF₂=CFOCF₂CF₂CH₂I) (0.6 part by mass based on 100 parts by mass of the target fluorine-containing elastomer) was introduced with pressurized nitrogen gas.

The weight of the obtained emulsion was 2,375 g, and the polymer concentration was 26.1 % by mass. The weight of the fluorine-containing elastomer was 620 g, the weight average molecular weight Mw measured by GPC was 150,000, the number average molecular weight Mn was 107,000, and Mw/Mn was 1.4. The polymer was one having the proportions of the monomers measured by ¹⁹F-NMR of VdF/TFE/PMVE = 67.2/13.3/19.5 (mole %). The Mooney viscosity at 100°C was 50.

The Mark-Houwink gradient "a" of this fluorine-containing elastomer (A-4) calculated by plotting in Mark-Houwink plot was 0.30.

### REFERENCE EXAMPLE 8

### (Preparation of straight chain type fluorine-containing polymer (B-4))

A 3-liter polymerization reactor provided with an electromagnetic stirrer as a stirrer was charged with 1,730 g of pure water, 3.46 g of C₅F₁₁CHOONH₄ and 0.0865 g of ammonium 2,3,3,3-tetrafluoro-2-[1,1,2,3,3,3-hexafluoro-2-(1,1,2-trifluoroallyloxy)propoxy]propionate. Then, the inside of a system was sufficiently replaced with nitrogen gas, followed by decrease in pressure, and this operation was repeated five times and the inside of the system was brought to reduced pressure. Subsequently, a pressurized monomer mixture of VdF/TFE/PMVE = 64/8/28 (mole %) was charged and a temperature was raised so that the inside of the reactor was brought up to 80°C and 1.47 MPa. Then, 0.011 g of ammonium persulfate (APS) dissolved in 10 g of pure water was introduced with pressurized nitrogen gas to initiate polymerization, and the polymerization was continued under the conditions of (a), (b) and (c). The stirring was stopped 10.2 hours after and monomers were discharged to terminate the polymerization. 0.008 g of APS was additionally added every three hours.
(a) As the polymerization proceeded, when the inside pressure began to decrease, a monomer mixture of VdF/TFE/PMVE (68/12/20 in mole %) was continuously charged to maintain the inside pressure at 1.47 MPa. By the time of completion of the polymerization, 444 g of the monomer mixture was supplied to the reactor.
(b) The stirring speed was kept at 600 rpm.
(c) When 8.9 g of the monomer mixture described in (a) (2 % by mass based on the total amount of additional monomer mixture) was supplied, 2.48 g of octafluoro-1,4-diiodobutane (0.56 part by mass based on 100 parts by mass of the fluorine-containing elastomer) was introduced with pressurized nitrogen gas.

The weight of the obtained emulsion was 2,140 g, and the polymer concentration was 20.7 % by mass. The weight of the fluorine-containing elastomer was 443 g, the weight average molecular weight Mw measured by GPC was 116,000, the number average molecular weight Mn was 82,000, and Mw/Mn was 1.42. The polymer was one having the proportions of the monomers measured by ¹⁹F-NMR of VdF/TFE/PMVE = 67.8/12.2/20.0 (mole %). The Mooney viscosity at 100°C was 25.

The Mark-Houwink gradient "a" of this fluorine-containing elastomer (B-4) calculated by plotting in Mark-Houwink plot was 0.79.

### EXAMPLE 8

80 Parts by mass of an aqueous dispersion of the branched fluorine-containing elastomer (A-4) prepared in Reference Example 7 was mixed with 20 parts by mass of an aqueous dispersion of the straight chain type fluorine-containing polymer (B-4) prepared in Reference Example 8, and after sufficiently mixing with stirring, co-coagulation was carried out.

Then, the obtained co-coagulated product was collected and dried at 130°C for 15 hours to obtain the fluorine-containing elastomer composition of the present invention. This composition was one comprising the branched fluorine-containing elastomer (A-4) and the straight chain type fluorine-containing polymer (B-4) in a mass ratio of 80/20. The Mooney viscosity at 100°C of the obtained fluorine-containing elastomer composition was 41.

The obtained fluorine-containing elastomer composition was evaluated according to the methods of evaluation mentioned above. The results are shown in Table 4.

### COMPARATIVE EXAMPLE 7

Evaluation was carried out using only the branched fluorine-containing elastomer (A-4) prepared in Reference Example 7 according to the methods of evaluation mentioned above. The results are shown in Table 4.

### COMPARATIVE EXAMPLE 8

Evaluation was carried out using only the straight chain type elastomeric fluorine-containing polymer (B-4) prepared in Reference Example 8 according to the methods of evaluation mentioned above. The results are shown in Table 4.

**TABLE 4**

| | unit | Example | Comparative Example | |
|---|---|---|---|---|
| | | 8 | 7 | 8 |
| Fluorine-containing elastomer composition | | | | |
| Branched fluorine-containing elastomer (A) | | A-4 | A-4 | - |
| Number average molecular weight (×10⁴) | | 10.7 | 10.7 | - |
| Amount | part by mass | 80 | 100 | - |
| Straight chain type fluorine-containing polymer (B) | | B-4 | - | B-4 |
| Number average molecular weight (×10⁴) | | 8.2 | - | 8.2 |
| Amount | part by mass | 20 | - | 100 |
| Iodine content | % by mass | 0.32 | 0.35 | 0.28 |
| Mooney viscosity (ML₁₊₁₀, 100°C) | | 41 | 50 | 24 |
| Formulation | | Standard 2 | Standard 2 | Standard 2 |
| Crosslinking conditions | | Standard | Standard | Standard |
| Vulcanization characteristics (Curast Model II: 160°C) | | | | |
| Minimum torque (ML) | kgf | 0.08 | 0.08 | 0.09 |
| Degree of vulcanization (MH) | kgf | 3.54 | 3.95 | 3.70 |
| Induction time (T10) | min | 0.8 | 0.7 | 0.7 |
| Optimum vulcanization time (T90) | min | 1.9 | 1.8 | 1.8 |
| Physical properties in normal state | | | | |
| 100 % modulus | MPa | 3.3 | 3.4 | 3 |
| Tensile strength at break | MPa | 16.2 | 15.5 | 18.6 |
| Tensile elongation at break | % | 220 | 195 | 305 |
| Hardness (Shore A) peak value | | 66.1 | 64.0 | 69.4 |
| Compression set (200°C × 72 hrs) | % | 18 | 16 | 31 |

From. the results shown in Table 4, it is seen that even when the straight chain type fluorine-containing polymer (B) is blended to the branched fluorine-containing elastomer (A), physical properties of the branched fluorine-containing elastomer (A) are maintained.

### EXAMPLE 9

90 Parts by mass of a coagulated product of the branched fluorine-containing elastomer (A-1) prepared in Reference Example 1 was dry-blended with 10 parts by mass of a coagulated product of the straight chain type fluorine-containing polymer (B-1) prepared in Reference Example 3 with rolls. The drying was carried out under the same drying conditions as in Reference Example 1.

The obtained composition was one comprising the branched fluorine-containing elastomer (A-1) and the straight chain type fluorine-containing polymer (B-1) in a mass ratio of 90/10. The Mooney viscosity at 100°C of the obtained fluorine-containing elastomer composition was 53.

The obtained fluorine-containing elastomer composition was evaluated according to the methods of evaluation mentioned above. The results are shown in Table 5.

### EXAMPLE 10

80 Parts by mass of a coagulated product of the branched fluorine-containing elastomer (A-1) prepared in Reference Example 1 was dry-blended with 20 parts by mass of a coagulated product of the straight chain type fluorine-containing polymer (B-1) prepared in Reference Example 3 with rolls. The drying was carried out under the same drying conditions as in Reference Example 1.

The obtained composition was one comprising the branched fluorine-containing elastomer (A-1) and the straight chain type fluorine-containing polymer (B-1) in a mass ratio of 80/20. The Mooney viscosity at 100°C of the obtained fluorine-containing elastomer composition was 41.

The obtained fluorine-containing elastomer composition was evaluated according to the methods of evaluation mentioned above. The results are shown in Table 5.

**TABLE 5**

| | unit | Example | |
|---|---|---|---|
| | | 9 | 10 |
| Fluorine-containing elastomer composition | | | |
| Branched fluorine-containing elastomer (A) | | A-1 | A-1 |
| Number average molecular weight (×10⁴) | | 6.1 | 6.1 |
| Amount | part by mass | 90 | 80 |
| Straight chain type fluorine-containing polymer (B) | | B-1 | B-1 |
| Number average molecular weight (×10⁴) | | 2.2 | 2.2 |
| Amount | part by mass | 10 | 20 |
| Iodine content | % by mass | 0.45 | 0.49 |
| Mooney viscosity (ML₁₊₁₀, 100°C) | | 53 | 41 |
| Formulation | | Standard 1 | Standard 1 |
| Crosslinking conditions | | Standard | Standard |
| Vulcanization characteristics (Curast Model II: 160°C) | | | |
| Minimum torque (ML) | kgf | 0.07 | 0.04 |
| Degree of vulcanization (MH) | kgf | 4.435 | 4.215 |
| Induction time (T10) | min | 0.8 | 0.8 |
| Optimum vulcanization time (T90) | min | 2.2 | 2.1 |
| Physical properties in normal state | | | |
| 100 % modulus | MPa | 5.4 | 5.4 |
| Tensile strength at break | MPa | 17.4 | 19.1 |
| Tensile elongation at break | % | 210 | 220 |
| Hardness (Shore A) peak value | | 73.0 | 72.2 |
| Compression set (200°C × 72 hrs) | % | 12 | 12 |

From the results shown in Table 5, it is seen that even in the case of the dry-blending, physical properties are nearly the same as in the case of the co-coagulation in Examples 1 and 2.

## Claims

1. A composition, which is a peroxide-crosslinkable fluorine-containing elastomer composition comprising:
(i) a branched fluorine-containing elastomer (A) having peroxide-crosslinkable cure site, a number average molecular weight (Mₙ) of 1,000-300,000 and a Mark-Houwink gradient a of < 0.6,
(ii) a straight chain type fluorine-containing polymer (B) having a Mₙ of 1,000-250,000 and a Mark-Houwink gradient a of ≥ 0.6, and being selected from VdF/HFP copolymer, VdF/HFP/TFE copolymer, VdF/PAVE copolymer, VdF/TFE/PAVE copolymer, VdF/HFP/PAVE copolymer and VdF/HFP/TFE/PAVE copolymer;
wherein a is obtained from a Mark-Houwink plot of the absolute weight molecular weight (Mₐ) represented by the axis of abscissa and the intrinsic viscosity represented by the axis of ordinate, wherein Mₐ and the intrinsic viscosity are determined by GPC at 30°C and a sample concentration of 0.4 % by mass, HCFC-225/HFIP(10%) as developing solvent and PMMA as standard sample

2. The composition of claim 1, wherein the elastomer (A) is a copolymer of an ethylenically unsaturated compound comprising at least one fluoroolefin with a compound of formula (1) and/or with bisolefin:
CY¹₂=CY²R_{f}¹X¹ (1)
wherein Y¹ and Y² are F, H or -CH₃; Rf¹ is linear or branched fluoro- or perfluoroalkylene which may have an ether bond-forming oxygen atom; and X¹ is I or Br.

3. The composition of claim 1 or 2, wherein the weight ratio (A)/(B) of elastomer (A) to polymer (B) is 95/5-55/45.

4. The composition of any of claims 1-3, which has a Mooney viscosity (ML₁₊₁₀= 100°C) of 10-120.

5. A method of preparing the composition of any of Claims 1-4, which comprises providing an elastomer (A) as defined in claim 1 and combining it with a polymer (B) as defined in claim 1 by any one of the following procedures:
(i) polymerizing elastomer (A)and subsequently polymerizing polymer (B) in the same polymerization reactor;
(ii) providing an aqueous dispersion of elastomer (A) and mixing it to an aqueous dispersion of polymer (B); and
(iii) providing an elastomer (A) and a polymer (B) and subjecting them to dry blending.

6. The method of claim 5, wherein the elastomer (A) is prepared by copolymerizing an ethylenically unsaturated compound comprising at least one fluoroolefin with a compound of formula (1) and/or with bisolefin:
CY¹₂=CY²R_{f}¹X¹ (1)
wherein Y¹ and Y² are F, H or -CH₃; Rf¹ is linear or branched fluoro- or perfluoroalkylene which may have an ether bond-forming oxygen atom; and X¹ is I or Br,
wherein in the copolymerization the addition of the compound of formula (1) starts at the time when 0-10 wt.% of the ethylenically unsaturated compound, based of the total amount thereof to be added to the polymerization system after addition of a polymerization initiator, has been added to the polymerization system.

7. A molded article obtained by crosslinking the composition of any of claims 1-4.

## Patentansprüche

1. Zusammensetzung, die eine Peroxid-vernetzbare fluorhaltige Elastomerzusammensetzung ist, umfassend:
(i) ein verzweigtes fluorhaltiges Elastomer (A) mit einer Peroxid-vernetzbaren Härtungsstelle, einem zahlengemittelten Molekulargewicht (Mₙ) von 1.000 bis 300.000 und einem Mark-Houwink-Gradienten a von < 0,6,
(ii) ein geradkettiges fluorhaltiges Polymer (B) mit einem Mₙ von 1.000 bis 250.000 und einem Mark-Houwink-Gradienten a von ≥ 0,6 und ausgewählt aus einem VdF/HFP-Copolymer, VdF/HFP/TFE-Copolymer, VdF/PAVE-Copolymer, VdF/TFE/PAVE-Copolymer, VdF/HFP/PAVE-Copolymer und VdF/HFP/TFE/PAVE-Copolymer;
wobei a aus einem Mark-Houwink-Plot des absoluten gewichtsgemittelten Molekulargewichts (Mₐ), dargestellt durch die Abszissenachse, und der intrinsischen Viskosität, dargestellt durch die Ordinatenachse, erhalten wird,
wobei Mₐ und die intrinsische Viskosität durch GPC bei 30°C und einer Probenkonzentration von 0,4 Masse-%,
HCFC-225/HFIP(10%) als Entwicklungslösungsmittel und PMMA als Standardprobe bestimmt werden.

2. Zusammensetzung gemäss Anspruch 1, wobei das Elastomer (A) ein Copolymer einer ethylenisch ungesättigten Verbindung, umfassend zumindest ein Fluorolefin, mit einer Verbindung der Formel (1) und/oder mit einem Bisolefin ist:
CY¹₂=CY²R_{f}¹X¹ (1)
worin Y¹ und Y² F, H oder -CH₃ sind; Rf¹ geradkettiges oder verzweigtes Fluor- oder Perfluoralkylen ist, das ein eine Etherbindung bildendes Sauerstoffatom aufweisen kann; und X¹ I oder Br ist.

3. Zusammensetzung gemäss Anspruch 1 oder 2, wobei das Gewichtsverhältnis (A)/(B) von Elastomer (A) zu Polymer (B) 95/5-55/45 beträgt.

4. Zusammensetzung gemäss einem der Ansprüche 1 bis 3, die eine Mooney-Viskosität (ML₁₊₁₀: 100°C) von 10 bis 120 aufweist.

5. Verfahren zur Herstellung einer Zusammensetzung gemäss einem der Ansprüche 1 bis 4, das die Bereitstellung eines Elastomers (A), wie in Anspruch 1 definiert, und Verbinden desselben mit einem Polymer (B), wie in Anspruch 1 definiert, durch irgendeines der nachstehenden Verfahren umfasst:
(i) Polymerisieren von Elastomer (A) und anschliessend Polymerisieren von Polymers (B) im gleichen Polymerisationsreaktor;
(ii) Bereitstellen einer wässrigen Dispersion von Elastomer (A) und Beimischen desselben zu einer wässrigen Dispersion von Polymer (B); und
(iii) Bereitstellen von Elastomer (A) und Polymer (B) und Unterziehen derselben einer Trockenmischung.

6. Verfahren gemäss Anspruch 5, wobei das Elastomer (A) durch Copolymerisieren einer ethylenisch ungesättigten Verbindung, umfassend zumindest ein Fluorolefin, mit einer Verbindung der Formel (1) und/oder mit einem Bisolefin hergestellt wird:
CY¹₂=CY²R_{f}¹X¹ (1)
worin Y¹ und Y² F, H oder -CH₃ sind; Rf¹ geradkettiges oder verzweigtes Fluor- oder Perfluoralkylen ist, das ein eine Etherbindung bildendes Sauerstoffatom aufweisen kann; und X¹ I oder Br ist,
wobei bei der Copolymerisation die Zugabe einer Verbindung der Formel (1) zu dem Zeitpunkt beginnt, zu dem 0 bis 10 Gew.% der ethylenisch ungesättigten Verbindung, bezogen auf deren Gesamtgewicht, die zu dem Polymerisationssystem nach Zugabe eines Polymerisationsinitiators zugegeben werden sollen, zu dem Polymerisationssystem zugegeben worden sind.

7. Formprodukt, erhalten durch Vernetzen einer Zusammensetzung gemäss einem der Ansprüche 1 bis 4.

## Revendications

1. Composition, qui est une composition élastomère contenant du fluor réticulable par un peroxyde comprenant :
(i) un élastomère contenant du fluor ramifié (A) comportant un site de durcissement réticulable par un peroxyde, une masse moléculaire moyenne en nombre (Mₙ) de 1000 à 300 000 et un gradient de Mark-Houwink *α* < 0,6,
(ii) un polymère contenant du fluor de type à chaîne droite (B) comportant une Mₙ de 1000 à 250 000 et un gradient de Mark-Houwink *α* ≥ 0,6, et étant choisi parmi un copolymère de VdF/HFP, un copolymère de VdF/HFP/TFE, un copolymère de VdF/PAVE, un copolymère de VdF/TFE/PAVE, un copolymère de VdF/HFP/PAVE et un copolymère de VdF/HFP/TFE/PAVE ;
dans laquelle *α* est obtenu à partir d'un tracé de Mark-Houwink de la masse moléculaire en poids absolue (Mₐ) représentée par l'axe des abscisses et la viscosité intrinsèque représentée par l'axe des ordonnées,
dans laquelle Mₐ et la viscosité intrinsèque sont déterminées par CPG à 30 °C et à une concentration d'échantillon de 0,4 % en masse, de HCFC-225/HFIP (10 %) comme solvant de développement et de PMMA comme échantillon étalon.

2. Composition selon la revendication 1, dans laquelle l'élastomère (A) est un copolymère d'un composé à insaturation éthylénique comprenant au moins une fluoro-oléfine avec un composé de formule (1) et/ou avec une bisoléfine :
CY¹2 = CY²R_{f}¹X¹ (1)
dans laquelle Y¹ et Y² sont F, H ou -CH₃ ; Rf¹ est un fluoro- ou un perfluoroalkylène linaire ou ramifié qui peut comporter un atome d'oxygène formant une liaison éther ; et X¹ est I ou Br.

3. Composition selon la revendication 1 ou 2, dans laquelle le rapport en poids (A)/(B) de l'élastomère (A) au polymère (B) est de 95/5 à 55/45.

4. Composition selon l'une quelconque des revendications 1 à 3, qui a une viscosité Mooney (ML₁₊₁₀: 100 °C) de 10 à 120.

5. Procédé de préparation de la composition selon l'une quelconque des revendications 1 à 4, qui comprend la fourniture d'un élastomère (A) tel que défini dans la revendication 1 et la combinaison de celui-ci avec un polymère (B) tel que défini dans la revendication 1 par l'un quelconque des modes opératoires suivants :
(i) polymérisation de l'élastomère (A) et ensuite polymérisation du polymère (B) dans le même réacteur de polymérisation ;
(ii) fourniture d'une dispersion aqueuse de l'élastomère (A) et mélange de celle-ci dans une dispersion aqueuse du polymère (B) ; et
(iii) fourniture d'un élastomère (A) et d'un polymère (B) et soumission de ceux-ci à un mélange à sec.

6. Procédé selon la revendication 5, dans lequel l'élastomère (A) est préparé par copolymérisation d'un composé à insaturation éthylénique comprenant au moins une fluoro-oléfine avec un composé de formule (1) et/ou avec une bisoléfine :
C^{Y1}₂ = CY²R_{f}¹X¹ (1)
dans laquelle Y¹ et Y² sont F, H ou -CH₃ ; Rf¹ est un fluoro- ou un perfluoroalkylène linaire ou ramifié qui peut comporter un atome d'oxygène formant une liaison éther ; et X¹ est I ou Br,
dans lequel dans la copolymérisation, l'addition du composé de formule (1) commence au moment où 0 à 10 % en poids du composé à insaturation éthylénique, par rapport à la quantité totale de celui-ci à ajouter au système de polymérisation après addition d'un initiateur de polymérisation, a été ajouté au système de polymérisation.

7. Article moulé obtenu par réticulation de la composition selon l'une quelconque des revendications 1 à 4.
